(19) Europäisches Patentamt / European Patent Office / Office européen des brevets

(11) **EP 4 189 358 B1**

(12) **EUROPÄISCHE PATENTSCHRIFT**

(45) Veröffentlichungstag und Bekanntmachung des Hinweises auf die Patenterteilung:
**10.07.2024   Patentblatt 2024/28**

(21) Anmeldenummer: **21752522.9**

(22) Anmeldetag: **29.07.2021**

(51) Internationale Patentklassifikation (IPC):
**G01N 21/64** (2006.01)    **G01J 3/02** (2006.01)
**G01J 3/18** (2006.01)    **G01J 3/28** (2006.01)
**G02B 21/00** (2006.01)    *G01J 3/44* (2006.01)

(52) Gemeinsame Patentklassifikation (CPC):
**G01N 21/6458; G01J 3/027; G01J 3/18;
G01J 3/2823; G02B 21/0076;** G01J 3/4406;
G01J 2003/2813; G01N 21/6408; G01N 2021/6423

(86) Internationale Anmeldenummer:
**PCT/EP2021/071269**

(87) Internationale Veröffentlichungsnummer:
**WO 2022/023474 (03.02.2022 Gazette 2022/05)**

(54) **VERFAHREN ZUM DETEKTIEREN VON EMISSIONSLICHT, DETEKTIONSVORRICHTUNG UND LASERSCANNING-MIKROSKOP**

METHOD FOR DETECTING EMISSION LIGHT, DETECTION DEVICE AND LASER SCANNING MICROSCOPE

PROCÉDÉ DE DÉTECTION DE LUMIÈRE D'ÉMISSION, DISPOSITIF DE DÉTECTION ET MICROSCOPE À BALAYAGE LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.07.2020   DE 102020120190**

(43) Veröffentlichungstag der Anmeldung:
**07.06.2023   Patentblatt 2023/23**

(73) Patentinhaber: **Carl Zeiss Microscopy GmbH**
**07745 Jena (DE)**

(72) Erfinder:
• **SCHWEDT, Daniel**
  **07745 Jena (DE)**
• **ANHUT, Tiemo**
  **07745 Jena (DE)**
• **SCHACHT, Peter**
  **99097 Erfurt (DE)**

(74) Vertreter: **Schiffer, Axel Martin**
  **Rundfunkplatz 2**
  **80335 München (DE)**

(56) Entgegenhaltungen:
**DE-A1- 102014 111 167     DE-A1- 102017 113 683
US-A1- 2020 003 551**

• **STRASSER FRANZISKA ET AL: "Spectral image scanning microscopy", BIOMEDICAL OPTICS EXPRESS, vol. 10, no. 5, 22 April 2019 (2019-04-22), United States, pages 2513, XP093103433, ISSN: 2156-7085, Retrieved from the Internet <URL:https://www.osapublishing.org/viewmedia.cfm?URI=boe-10-5-2513> DOI: 10.1364/BOE.10.002513**
• **MARCO CASTELLO ET AL: "Image Scanning Microscopy with Single-Photon Detector Array", BIORXIV, 2 June 2018 (2018-06-02), XP055717311, Retrieved from the Internet <URL:https://www.biorxiv.org/content/10.1101/335596v1.full.pdf> DOI: 10.1101/335596**

- **HUFF JOSEPH ET AL: "The Airyscan Detector from ZEISS Confocal Imaging with Improved Signal-to-Noise Ratio and Superresolution", CARL ZEISS MICROSCOPY GMBH - TECHNOLOGY NOTE, 1 July 2015 (2015-07-01), XP055685579, Retrieved from the Internet <URL:http://www.gattaquant.com/files/en_wp_airyscan-detector.pdf> [retrieved on 20200415]**

**Beschreibung**

Die vorliegende Erfindung betrifft in einem ersten Gesichtspunkt ein Verfahren zum Detektieren von Emissionslicht, insbesondere Fluoreszenzlicht von mindestens einem Fluoreszenzfarbstoff, in einem Laser-Scanning-Mikroskop nach dem Oberbegriff des Anspruchs 1. In weiteren Aspekten bezieht sich die Erfindung auf eine Detektionsvorrichtung zum Detektieren von Emissionslicht in einem Laser-Scanning-Mikroskop nach dem Oberbegriff des Anspruchs 12 und auf ein Laser-Scanning-Mikroskop nach dem Oberbegriff des Anspruchs 14.

Ein gattungsgemäßes Verfahren zum Detektieren von Emissionslicht, insbesondere Fluoreszenzlicht von mindestens einem Fluoreszenzfarbstoff, in einem Laser-Scanning-Mikroskop ist beispielsweise offenbart in M. Castello et al., "Image Scanning Microscopy with Single-Photon Detector Array", bioRxiv, doi: http://dx.doi.org/10.1101/335596 (Im Folgenden: [Castello et al. 2019]. Dabei wird von einer Probe kommendes Emissionslicht mit einer Abbildungsoptik auf einen in einer Bildebene befindlichen zweidimensionalen Matrixsensor mit einer Vielzahl von Pixeln geleitet und eine Detektionspunktverteilungsfunktion wird mit dem Matrixsensor räumlich überabgetastet detektiert.

Eine gattungsgemäße Detektionsvorrichtung zum Detektieren von Emissionslicht in einem Laser-Scanning-Mikroskop ist ebenfalls in [Castello et al. 2019] offenbart. Eine gattungsgemäße Detektionsvorrichtung weist einen zweidimensionalen Matrixsensor in einer Bildebene mit einer Vielzahl von Pixeln zum räumlich überabgetasteten Detektieren einer Detektionspunktverteilungsfunktion von von einer Probe kommendem Emissionslicht und eine Abbildungsoptik zum Leiten des Emissionslichts auf den zweidimensionalen Matrixsensor auf.

Ein gattungsgemäßes Laser-Scanning-Mikroskop ist ebenfalls in [Castello et al 2019] beschrieben und weist folgende Komponenten auf: eine Lichtquelle, insbesondere einen Laser, zum Aussenden von Anregungslicht, einen Anregungsstrahlengang mit einem Mikroskopobjektiv zum Leiten des Anregungslichts auf oder in eine zu untersuchende Probe, eine Scaneinrichtung im Anregungsstrahlengang zum Scannen mindestens eines Beleuchtungsspots über die Probe, einen Detektionsstrahlengang zum Leiten von von der Probe abgestrahltem Emissionslicht, insbesondere Fluoreszenzlicht, auf eine Detektionseinheit, einen Hauptfarbteiler zum Trennen von Anregungslicht und Emissionslicht, die Detektionseinheit zum Nachweisen des Emissionslichts und eine Steuer- und Auswerteeinheit, insbesondere einen PC, zum Ansteuern der Lichtquelle und zum Auswerten von von der Detektionseinheit gewonnenen Messdaten.

In der biomedizinischen Forschung haben sich in den vergangenen Jahrzehnten konfokale Laserscanmikroskope (LSM) als mächtige Werkzeuge etabliert, weil sie neben der reinen Bildgebung an fluoreszierenden biologischen Proben auch viele bildbasierte, korrelative oder statistische Experimente und Analysen unterstützen. Ein wesentlicher Grund für diese Mächtigkeit ist, dass mit dem LSM mehrere Farbstoffe gleichzeitig mit moderatem gerätetechnischen Aufwand gemessen werden können. Dazu sind viele Lösungen bekannt. Zum Beispiel kann mit dichroitischen Filtern eine Aufspaltung in verschiedene Teilstrahlen erfolgen, die dann jeweils beispielsweise einem Photonenvervielfacher (Englisch: Photomultiplier Tube - PMT) als Sensor zugeführt werden. Deutlich flexibler sind dagegen Anordnungen, die das Emissionslicht mit einem Gitter oder Prisma spektral dispergieren, um dann das Spektrum mit einem Zeilensensor zu detektieren. Unerwünschte Spektralbereiche können mit beweglichen Blenden vor dem Sensor flexibel und farbstofffabhängig blockiert werden. Außerdem sind auch Lösungen bekannt, bei denen beispielsweise mit verspiegelten Blenden Spektralbänder definiert werden, die dann verschiedenen PMTs zugeführt werden. Der Begriff Farbstoff soll hier und im Folgenden sowohl synthetische Farbstoffe wie auch fluoreszente Proteine umfassen. Weiterhin sollen auch intrinsisch emittierende Strukturen umfasst sein. Zum Beispiel emittieren viele biologische Strukturen Licht unter Lasereinstrahlung einer bestimmten Wellenlänge, was dann z.B. als Autofluoreszenz bezeichnet wird.

Eine Innovation der konfokalen Mikroskopsysteme, die zwar schon vor ca. 30 Jahren theoretisch beschrieben wurde, jedoch erst 2014 mit dem LSM880 der Firma ZEISS kommerzialisiert wurde, ist die sogenannte image scanning microscopy (ISM; http://www.gattaquant.com/files/en_wp_airyscan-detector.pdf). Sie beruht auf einer überabgetasteten Messung der Detektionspunktverteilungsfunktion mit einem kameraartigen Sensor und ermöglicht zum einen das Erreichen der konfokalen Auflösungsgrenze trotz geöffnetem Pinhole und erhöht zum anderen merklich die Sensitivität des Systems über die inhärente Parallelisierung der Detektion. Die heute im LSM980 umgesetzte Lösung ist jedoch einerseits sehr teuer, da eine faserbasierte Bildkonvertierung (von 2D auf 1D) mit einer GaAsP-PMT-Zeile kombiniert wird. Andererseits ist damit die Anzahl der Pixel, die zum Überabtasten der Punktverteilungsfunktion (PSF) genutzt werden können, stark eingeschränkt. Im konkreten Fall sind es genau 32 Pixel. Diese Sensoren sind deshalb nur sinnvoll in Anordnungen einsetzbar, bei denen Spektralkanäle mittels dichroitischen Filtern definiert werden und bei denen zudem noch ein optischer Zoom benötigt wird, mit welchem die PSF, die sowohl vom gewählten Objektiv (genauer dem Lichtleitwert und damit dem Verhältnis NA/M) und der Wellenlänge abhängt, zum Sensor geleitet wird. Zudem erlauben die Stückkosten dieser Detektortechnologie kaum, mehr als einen Detektor pro Gerät zu verbauen.

Sensorseitig zeichnet sich in den vergangenen Jahren eine rasante Entwicklung im Bereich der sogenannten SPAD-arrays oder SPAD-Kameras (SPAD = Single-photon avalanche diode) ab. Diese Kameras ermöglichen prinzipiell eine individuelle Aktivierung der Pixel, wobei ein Pixel hier durch eine einzelne Single-photon Avalanche Diode verwirklicht ist. Zudem können die Pixel im sogenannten Geigermodus betrieben werden, so dass Photonenzählung auf einem Flächensensor möglich ist. Damit ist das ausgelesene Signal sofort digital, was extrem große Bildraten im Bereich um 1 MHz ermöglicht. SPAD-Kameras weisen zudem kein Ausleserauschen auf. Ausleserauschen tritt insbesondere bei anderen Sensoren wie sCMOS-Sensoren oder CCDs auf und nimmt mit hoher Ausleserate stark zu. EM-CCD nutzen einen sensornahen Verstärkungsmechanismus, um das Signal über das Ausleserauschen zu heben und können somit prinzipiell einzelphotonensensitiv werden. Allerdings wird hierbei signifikantes Verstärkerrauschen (auch bezeichnet als excess noise; multiplication noise) eingeführt, welches die effektive Empfindlichkeit des Sensors halbiert. Zudem sind die erreichbaren Geschwindigkeiten bei höherer Pixelzahl fundamental limitiert. sCMOS-Kameras erreichen geringes Ausleserauschen im Bereich von 0.3e-, welches eine Photonenzählung mit diesen Kameras prinzipiell erlaubt.

Mit Bildraten im MHz-Bereich werden SPAD-Kameras bereits als Sensoren für LSMs interessant, deren Pixelverweildauern im Bereich um 1 μs liegen. Beispielsweise wurden mit einer solchen Kamera 156 kfps (fps = frames per second) mit einer Sensorauflösung von 512x128 Pixeln bei 1 bit Datentiefe erreicht. Das entspricht einer Datenrate von etwa 10 Gbit. Das bedeutet, dass Zeilensensoren mit ca. 1000x6 Pixeln sogar mit einer Bildrate von 1 Mfps bei 1 bit Datentiefe möglich sein sollten. Die Begrenzungen sind aktuell noch nicht an einer fundamentalen Grenze, sondern eher durch die enormen Datenraten technisch bestimmt. Bei nur einem Bit Datentiefe sind Geschwindigkeiten erreichbar, die ungefähr dem Inversen der Totzeit entsprechen und somit im Bereich von 10 MHz liegen. Für das Beispiel oben entspräche das allerdings einer Datenrate von 100 Gbit/s.

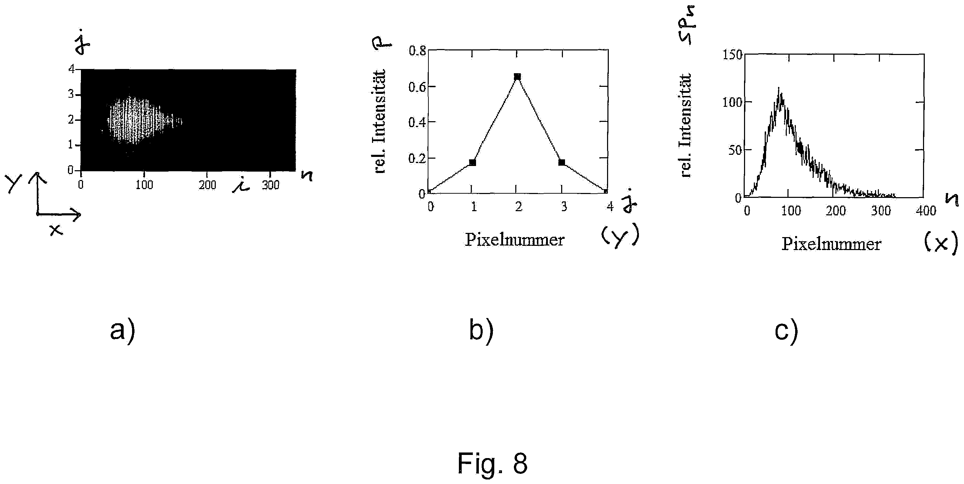

US 2020/003551 A1 betrifft ein Verfahren und eine Vorrichtung zum Bestimmen einer Position eines Objekts mit besonders hoher Auflösung. Im Zusammenhang mit Figur 8 wird darin ein Detektionsmodul beschrieben, welches zum Nachweis von Fluorophoren in axial unterschiedlichen Ebenen einer Probe dient. Von der Probe kommendes Licht wird mit einem Polarisationsstrahlteiler in zwei Teilkanäle mit jeweils linearer Polarisation zerlegt, wobei die Polarisationen der Teilkanäle zueinander senkrecht orientiert sind. Die Teilstrahlen werden sodann, nach Umwandlung der Polarisationen in jeweils zirkulare Polarisationen, zum Erzeugen eines konischen Beugungsmusters durch konische Kristalle geführt. Danach werden die zirkularen Polarisationen wieder in lineare Polarisationen umgewandelt und für jeden Kanal werden die Polarisationsanteile getrennt oder vereinigt, je nachdem, ob es sich um kollimiertes oder nicht kollimiertes Licht handelt. Das Licht, das aus dem Strahl kollimierten Lichts stammt, wird auf einen ersten Detektor fokussiert und das Licht, das aus dem Strahl nicht-kollimierten Lichts stammt, schließlich wird nach weiterer Manipulation der Polarisierung auf einen zweiten Detektor fokussiert.

Strasser Franziska et al: "Spectral image scanning microscopy", Biomedical optics express, Bd. 10, Nr. 5, 22. April 2019 (2019-04-22), Seiten 2513-2527, offenbart ein Verfahren und eine Vorrichtung gemäß den Oberbegriffen der Ansprüche 1 bzw. 12.

Entsprechende Verfahren und Vorrichtungen sind auch in den Dokumenten DE 10 2014 111167 A1 sowie DE 10 2017 113683 A1 offenbart.

Als eine Aufgabe der Erfindung kann angesehen werden, ein Verfahren der oben angegebenen Art bereitzustellen, welches besonders vielseitig einsetzbar ist. Außerdem soll eine geeignete Detektionsvorrichtung und ein Laser-Scanning-Mikroskop angegeben werden.

Diese Aufgabe wird durch das Verfahren mit den Merkmalen des Anspruchs 1, durch die Detektionsvorrichtung mit den Merkmalen des Anspruchs 12 und durch das Laser-Scanning-Mikroskop mit den Merkmalen des Anspruchs 14 gelöst.

Vorteilhafte Varianten des erfindungsgemäßen Verfahrens und bevorzugte Ausführungsbeispiele der erfindungsgemäßen Detektionsvorrichtung und des erfindungsgemäßen Mikroskops werden im Folgenden, insbesondere im Zusammenhang mit den abhängigen Ansprüchen und den Figuren erläutert.

Das Verfahren der oben angegebenen Art ist erfindungsgemäß dadurch weitergebildet, dass das von der Probe kommende Emissionslicht mit einer Dispersionseinrichtung, insbesondere in einer Dispersionsrichtung, spektral zerlegt wird, dass das spektral zerlegte Emissionslicht mit dem Matrixsensor spektral aufgelöst detektiert wird und dass bei der Auswertung der von den Pixeln eines Pixelbereichs gemessenen Intensitäten die spektrale Auftrennung mindestens für einige dieser Pixel zurückgenommen wird.

Die Detektionsvorrichtung der oben angegebenen Art ist erfindungsgemäß dadurch weitergebildet, dass zum spektralen Auftrennen des Emissionslichts eine Dispersionseinrichtung vorhanden ist, dass der Matrixsensor zum spektral auflösenden Detektieren des spektral aufgetrennten Detektionslichts eingerichtet und positioniert ist und dass eine mit dem Matrixsensor verbundene Auswerteelektronik vorhanden ist, die dazu eingerichtet ist, bei der Auswertung der von den Pixeln eines Pixelbereichs gemessenen Intensitäten die spektrale Auftrennung für diese Pixel zurückzunehmen.

Das Laser-Scanning-Mikroskop der oben angegebenen Art ist erfindungsgemäß dadurch weitergebildet, dass die Detektionseinheit eine erfindungsgemäße Detektionsvorrichtung aufweist.

Als ein wesentlicher Gedanke der Erfindung kann angesehen werden, dass das von der Probe kommende Emissionslicht spektral aufgetrennt wird, sodass die spektralen Anteile von verschiedenen Fluoreszenzfarbstoffen im Prinzip zunächst auf verschiedene, also räumlich getrennte Bereiche des Matrixsensors treffen. Diese Bereiche werden identifiziert und jeweils einem Fluoreszenzfarbstoff zugeordnet. Mindestens für einige der Pixel in den jeweiligen Bereichen wird dann die spektrale Trennung rechnerisch zurückgeführt, sodass für die einzelnen Fluoreszenzfarbstoffe, im Prinzip wie bei der bekannten ISM, eine Punktverteilungsfunktion ermittelt werden kann. Es können deshalb für verschiedene Fluoreszenzfarbstoffe die jeweiligen Punktverteilungsfunktionen gemessen werden. Die spektrale Trennung wird man zweckmäßig jedenfalls für diejenigen Pixel durchführen, bei denen signifikant Intensität gemessen wird.

Als ein wesentlicher Vorteil der vorliegenden Erfindung kann angesehen werden, dass sowohl die Vorteile der spektralen Flexibilität als auch die durch die Überabtastung der Punktverteilungsfunktion im Hinblick auf Auflösung und Sensitivität erzielten Wirkungen erreicht werden können.

Das erfindungsgemäße Verfahren, die erfindungsgemäße Detektionsvorrichtung und das erfindungsgemäße Mikroskop ermöglichen deshalb ISM auch mit einer spektral dispergierten Signalverteilung. Darüber hinaus zeichnen sich die erfindungsgemäße Detektionsvorrichtung und das erfindungsgemäße Mikroskop dadurch aus, dass eine besonders hohe Lichteffizienz und insgesamt stabile Anordnungen erreicht werden können.

Die erfindungsgemäße Detektionsvorrichtung ist insbesondere zum Durchführen des erfindungsgemäßen Verfahrens geeignet.

Mit dem Begriff Detektionspunktverteilungsfunktion ist diejenige Intensitätsverteilung auf dem Detektor gemeint, die durch ein punktförmig leuchtendes Objekt in der Probenebene erzeugt wird.

Die zu unterschiedlichen Farbstoffen gehörenden Pixelbereiche können auf dem Detektor prinzipiell auch überlappen. Wichtig ist, dass mindestens eine gewisse räumliche Trennung der Pixelbereiche gegeben ist. Es ist klar, dass die Auswertung umso einfacher und besser geht, je deutlicher die Pixelbereiche getrennt sind oder je mehr sich die spektrale Signatur der jeweiligen Farbstoffe unterscheidet.

Das erfindungsgemäße Laser-Scanning-Mikroskop und insbesondere die Steuer- und Auswerteeinheit kann zusammen mit der Detektionseinrichtung zum Durchführen des erfindungsgemäßen Verfahrens eingerichtet sein.

Einige Beispiele, wie das rechnerische Zurückführen der spektralen Auftrennung durchgeführt werden kann, werden im Folgenden erläutert.

Bei einer besonders bevorzugten Variante des Verfahrens wird anhand eines mit dem Matrixsensor gemessenen Spektrums mindestens ein Pixelbereich identifiziert, der der Emission eines Farbstoffs zugewiesen wird.

Zweckmäßig wird zunächst eine spektrale Intensitätsverteilung des Emissionslichts auf dem Matrixsensor ermittelt. Anhand dieser Intensitätsverteilung können dann zum Beispiel die Pixelbereiche identifiziert werden. Außerdem kann die Intensitätsverteilung für das rechnerische Zurückführen der spektralen Auftrennung verwendet werden. Bei einer besonders bevorzugten Variante des erfindungsgemäßen Verfahrens wird für die Bestimmung einer spektralen Intensitätsverteilung des Emissionslichts auf dem Matrixsensor ein zu einer bestimmten Wellenlänge gehörender Intensitätswert bestimmt, indem die Messdaten einer Mehrzahl von Pixeln einer Spalte des Matrixsensors, insbesondere die Messdaten aller Pixel einer Spalte des Matrixsensors, senkrecht zur Dispersionsrichtung, summiert werden.

Diese Daten betreffend die spektrale Intensitätsverteilung des Emissionslichts können beispielsweise nach einer Veränderung der Messumgebung automatisch neu ermittelt werden. Als eine Veränderung der Messumgebung wird vor allem eine Änderung der zu untersuchenden Probe, gegebenenfalls auch des untersuchten Probenorts, die beziehungsweise der gegebenenfalls mit unterschiedlichen Farbstoffen präpariert sein kann, angesehen.

Ergänzend oder zusätzlich kann vorgesehen sein, dass die Daten betreffend die spektrale Verteilung kontinuierlich und insbesondere automatisch aus einer festzulegenden Anzahl von, insbesondere unmittelbar, vorausgegangenen Messungen ermittelt werden. Diese Variante hat den Vorteil, dass ein separates Veranlassen einer Aufnahme der Daten nicht notwendig ist.

Es versteht sich, dass für alle hier beschriebenen Auswertungen eine Mehrzahl von Messdaten addiert werden, um ein besseres Signal-zu-Rausch-Verhältnis zu erreichen. Bedarfsweise kann dabei die Anzahl der Messungen, über welche für die Gewinnung der gewünschten Daten gemittelt wird, unterschiedlich sein.

Bei einer weiteren bevorzugten Variante des erfindungsgemäßen Verfahrens werden dann in der ermittelten spektralen Verteilung zum Identifizieren der Pixelbereiche automatisiert Maxima und Minima gesucht und einem Benutzer können aufgrund von gefundenen Maxima und Minima spektrale Grenzen für das Errechnen der Punktverteilungsfunktion eines bestimmten Farbstoffs vorgeschlagen werden. Alternativ können aufgrund von gefundenen Maxima und Minima spektrale Grenzen auch automatisch festgelegt werden. Entsprechend kann die Steuer- und Auswerteeinheit bei dem erfindungsgemäßen Mikroskop eingerichtet sein zum Suchen von Maxima und Minima in einer ermittelten spektralen Verteilung und zum Vorschlagen von spektralen Grenzen für das Errechnen der Punktverteilungsfunktion eines bestimmten Farbstoffs auf Grundlage von gefundenen Maxima und Minima. Alternativ kann die Steuer- und Auswerteeinheit eingerichtet sein zum selbständigen Festlegen von spektralen Grenzen für das Errechnen der Punktverteilungsfunktion eines bestimmten Farbstoffs auf Grundlage von gefundenen Maxima und Minima.

Mit dem erfindungsgemäßen Verfahren und dem erfindungsgemäßen Mikroskop können auch Proben mit spektral überlappenden Farbstoffen oder fluoreszenten Proteinen abgebildet und vermessen werden.

Bei einer bevorzugten Variante des erfindungsgemäßen Verfahrens überlappen die Pixelbereiche auf dem Matrixdetektor und es wird ein spektrales Entmischen der von den einzelnen Pixeln gemessenen Intensitäten durchgeführt. Verfahren zum spektralen Entmischen oder "spectral unmixing" sind im Prinzip bekannt.

Zusätzlich zu den hier beschriebenen Verfahren zum Zurücknehmen der spektralen Aufspaltung würde man dann vor oder nach dem Zurücknehmen der spektralen Aufspaltung ein solches Verfahren zum spektralen Entmischen ("spectral unmixing") durchführen. Beispielsweise kann man zunächst für eine frei gewählte Anzahl spektraler Bänder - bei zwei Farbstoffen typischerweise zwei Bereiche mit reinen Emissionen und einem Bereich überlappender Emission - das Zurücknehmen der Dispersion ausführen, dann Image Scanning Microscopy anwenden und dann die - im Beispiel drei - Kanäle entmischen.

Mit dieser Methode kann man die relativen Anteile bestimmter spektraler Komponenten in einem Pixel bestimmen. Das heißt, man verschiebt beispielsweise gemäß einer Vorschrift zum Pixelreassignment (siehe unten) nicht die gesamte Intensität eines Pixels, sondern nur den gewichteten Anteil. Die erfindungsgemäße Anordnung kann dazu genutzt werden, die entsprechenden Referenzspektren aufzunehmen. In einem nächsten Schritt kann man dann z.B. zeilenweise eine spektrale Entmischung vornehmen und die jeweiligen spektralen Gewichte bestimmen, aus welchen sich die spektral gewichteten Anteile ergeben. Neben dem Verfahren des spectral unmixing gibt es aber auch noch weitere Methoden zur Trennung spektraler Anteile, beispielsweise PCS, SCA, und Verwendung von "deep learning".

Das erfindungsgemäße Verfahren kann insbesondere dazu dienen, für mindestens einen Fluoreszenzfarbstoff eine Detektionspunktverteilungsfunktion zu bestimmen. Ein besonderer Vorteil der Erfindung ist aber, dass es auch möglich ist, die Detektionspunktverteilungsfunktion für mehrere Farbstoffe mit unterschiedlichen Emissionsspektren aus den Messdaten einer Messung zu bestimmen.

Wenn es die Größe des verwendeten Matrixsensors, konkret die Anzahl der Pixel dieses Matrixsensors, gestattet, ist prinzipiell auch eine Multipunkt-Variante des erfindungsgemäßen Verfahrens möglich. Dabei wird von mehreren gleichzeitig auf einer Probe mit Anregungslicht beleuchteten Punkten abgestrahltes Emissionslicht gleichzeitig auf den Matrixsensor geleitet und ausgewertet. Dabei müssen der Anregungsstrahlengang und der Detektionsstrahlengang für die Multispot-Anregung und -Detektion eingerichtet sein.

Bei einer ersten bevorzugten Variante für die Rücknahme der spektralen Auftrennung für die einzelnen Pixel eines Pixelbereichs werden die von diesen Pixeln gemessenen Intensitätswerte miteinander verrechnet unter Berücksichtigung der spektralen Intensitätsverteilung des Emissionslichts für den zu dem Pixelbereich gehörenden Farbstoff und unter Berücksichtigung einer räumlichen Intensitätsverteilung von einzelnen spektralen Anteilen auf dem Matrixsensor.

Damit korrespondierend kann die Auswerteelektronik der erfindungsgemäßen Detektionsvorrichtung dazu eingerichtet sein, zur Rücknahme der spektralen Auftrennung die von Pixeln eines Pixelbereichs gemessenen Intensitätswerte miteinander zu verrechnen unter Berücksichtigung einer spektralen Intensitätsverteilung des Emissionslichts für den zu dem Pixelbereich gehörenden Farbstoff und unter Berücksichtigung einer räumlichen Intensitätsverteilung von einzelnen spektralen Anteilen auf dem Matrixsensor.

Die räumliche Intensitätsverteilung der einzelnen spektralen Anteile bestimmt, wie stark die auf dem Matrixsensor relativ zueinander verschobenen spektralen Anteile einer Punktverteilungsfunktion eines Farbstoffs in der Dispersionsrichtung räumlich überlappen.

Als räumliche Intensitätsverteilung der einzelnen spektralen Anteile kann dabei eine Intensitätsverteilung verwendet werden, die gemessen wird von Pixeln einer Spalte senkrecht zur Dispersionsrichtung, insbesondere von derjenigen Spalte, in der in dem jeweiligen Pixelbereich die höchsten Intensitäten gemessen werden. Dahinter steht die Annahme, dass die Detektionspunktverteilungsfunktion auf dem Matrixsensor rotationssymmetrisch, also kreisförmig, ist. Wenn rotationssymmetrische Optiken zum Einsatz kommen, ist das eine gute Annahme.

Bei einer weiteren wichtigen Gruppe von Verfahrensvarianten wird die Rücknahme der spektralen Auftrennung für die einzelnen Pixel eines Pixelbereichs durch ein Pixel-Reassignment bewerkstelligt. Für nicht spektral auflösende Verfahren ist das aus der Image-Scanning-Mikroskopie (ISM) bekannt, siehe beispielsweise [Castello et al. 2019].

Erfindungsgemäß ist 18 die Auswerteelektronik der erfindungsgemäßen Detektionsvorrichtung dazu eingerichtet, zur Rücknahme der spektralen Auftrennung für die einzelnen Pixel eines Pixelbereichs die von den Pixeln gemessenen Intensitätswerte einem relativ zu dem jeweiligen Pixel verschobenen Ort in der Bildebene zuzuweisen (Pixel-Reassignment), wobei der Verschiebevektor abhängt vom Ort des jeweiligen Pixels und von der zu diesem Ort gehörenden Wellenlänge.

Erfindungsgemäß werden zur Rücknahme der spektralen Auftrennung für die einzelnen Pixel eines Pixelbereichs die von den Pixeln gemessenen Intensitätswerte einem relativ zu dem jeweiligen Pixel verschobenen Ort in der Bildebene zugewiesen (Pixel-Reassignment). Ein Verschiebungsvektor hängt dabei, wie beim bekannten Pixel-Reassignment, ab vom Ort des jeweiligen Pixels, hier aber zusätzlich auch von der zu diesem Ort gehörenden Wellenlänge.

Konkret wird also für das Pixel-Reassignment für jedes Pixel ein Verschiebevektor bestimmt, der abhängig ist von dem Ort des betreffenden Pixels und der zu dem betreffenden Pixel gehörenden Wellenlänge. Der für das betreffende Pixel gemessene Intensitätswert wird dann einem Ort zugeordnet, der relativ zu dem betreffenden Pixel um den Verschiebungsvektor verschoben ist.

Beispielsweise kann ein von der Wellenlänge unabhängiger Anteil des Verschiebungsvektors für ein bestimmtes Pixel erhalten werden durch Skalieren einer Vektorkomponente eines Vektors von einem Referenzpixel zu dem betreffenden Pixel mit einem Reassignment-Faktor. Unter der Annahme, dass die Punktverteilungsfunktion für die Anregung und die Emission identisch ist (Vernachlässigung eines Stokes-Shift) würde man einen Reassignment-Faktor von -1/2 erhalten, dass heißt, die von einem bestimmten Pixel gemessenen intensitätswerte würden einem Ort in der Bildebene zugeordnet, der gerade in der Mitte der Strecke von einem Referenzpixel zu dem betreffenden Pixel liegt.

Insbesondere wird das Pixel-Reassignment so durchgeführt, dass eine erhaltene Detektionspunktverteilungsfunktion in der Dispersionsrichtung im Wesentlichen dieselbe Form aufweist wie senkrecht zur Dispersionsrichtung. Dahinter steht die Annahme, dass die Detektionspunktverteilungsfunktion bei Einsatz von rotationssymmetrischen Optiken eine kreissymmetrische Intensitätsverteilung aufweisen muss.

Es bestehen aber weitere Verfahren, die entsprechenden Verschiebungsvektoren zu erhalten. Beispielsweise können die Verschiebungsvektoren, die zu einem einer Probenstruktur zugeordneten Wellenlängenbereich gehören, bestimmt werden durch Auswerten einer Phasenkorrelation einer Mehrzahl von gescannten Bildern.

Als Matrixsensor können bei der erfindungsgemäßen Detektionsvorrichtung analog integrierende und/oder Photonen zählende Detektoren zum Einsatz kommen. Bevorzugt werden eine sCMOS-Kamera, eine EMCCD-Kamera und/oder ein ladungsintegrierender Sensor verwendet. Besonders vorteilhaft weist der Matrixsensor eine SPAD-Kamera auf oder es wird als Matrixsensor eine SPAD-Kamera verwendet. Besonders bevorzugt wird der Matrixsensor, insbesondere die SPAD-Kamera, in einem Photonenzählmodus betrieben, in dem einzelne Photonen gezählt werden können. Dieser Modus, der auch als auch als "Geiger-Modus" bezeichnet wird, zeichnet sich durch ein besonders günstiges Signal-zu-Rausch-Verhältnis aus.

Besonders vorteilhaft für die Erfindung wirken sich die in jüngerer Zeit deutlich reduzierten Kosten für die zum Einsatz kommenden Sensoren aus. Mittels klassischer PMT-Technologie mit Faserkopplung sind die hier beschriebenen Anordnungen kaum vorstellbar.

Als Dispersionseinrichtung können bei der erfindungsgemäßen Detektionsvorrichtung insbesondere lichtbeugende und/oder lichtbrechende Einrichtungen verwendet werden. Besonders bevorzugt weist die Dispersionseinrichtung ein Gitter, insbesondere ein Strichgitter, und/oder ein Prisma auf. Prinzipiell kann auch ein Grisma, also eine Kombination eines Prismas und eines Gitters, zum Einsatz kommen. Ebenso sind stellbare oder steuerbare Elemente wie DMDs (DMD = Digital Micromirror Device), MEMS (MEMS = microelectro-mechanical systems) oder SLMs (SLM = Spatial Light Modulator; deutsch: Flächenlichtmodulator) möglich.

Bei einer besonders bevorzugten Variante der erfindungsgemäßen Detektionsvorrichtung liegt die Dispersionsrichtung in der Richtung und insbesondere parallel, zu einer Koordinatenrichtung des Matrixsensors. Beispielsweise können die Pixel in der Richtung der Dispersionsrichtung als Pixelzeilen und die Pixel in der Richtung senkrecht zur Dispersionsrichtung als Pixelspalten bezeichnet werden. Die Ausrichtung des Matrixsensors dergestalt, dass die Dispersionsrichtung parallel zur Richtung der Pixelzeilen zu liegen kommt, hat den Vorteil, dass die Pixel in den Pixelspalten jeweils zu genau demselben Wellenlängenbereich oder, vereinfacht gesprochen, zu genau derselben Wellenlänge gehören.

Im Hinblick auf die Dimensionierung des Matrixsensors und/oder der optischen Abbildung auf den Matrixsensor ist bevorzugt, wenn ein Pixel-Pitch (im Prinzip die Gitterkonstante) des Matrixsensors größer gewählt wird als eine Änderung der Breite eines Airyscheibchens der Detektionspunktverteilungsfunktion in der Ebene des Matrixsensors über eine spektrale Bandbreite eines Farbstoffs. In diesem Zusammenhang kann außerdem bevorzugt sein, wenn der Matrixsensor und/oder die optische Abbildung auf den Matrixsensor so dimensioniert sind, dass eine spektrale Bandbreite pro Pixel des Matrixsensors in der Dispersionsrichtung kleiner ist als 0,5 nm, bevorzugt kleiner als 0,4 nm, besonders bevorzugt kleiner als 0,3 nm. Diese Ausgestaltungen ermöglichen im Hinblick auf die Berechnung der Punktverteilungsfunktion, konkret auf die Durchführung der diskreten Entfaltung, eine die Rechnung vereinfachende Annahme. Genauer gesagt, kann man dann in guter Näherung davon ausgehen, dass die Breite des Airyscheibchens über den Verlauf des Spektrums eines Farbstoffs im Wesentlichen nicht von der Wellenlänge abhängt. Gleichwohl wird eine hinreichende spektrale Auflösung erreicht.

Besonders bevorzugt können der Matrixsensor und/oder die optische Abbildung auf den Matrixsensor weiterhin so dimensioniert werden, dass ein Durchmesser eines Airyscheibchens der Detektionspunktverteilungsfunktion in der Ebene des Matrixsensors kleiner ist als die zwanzigfache Gitterkonstante, besonders bevorzugt kleiner als die siebenfache Gitterkonstante und besonders bevorzugt kleiner als die fünffache Gitterkonstante des Matrixsensors. Bei dieser Dimensionierung kann die Berechnung der diskreten Entfaltung vorteilhaft auf vergleichsweise wenige Wellenlängen, nämlich auf diejenige Anzahl, die der von dem jeweiligen Airyscheibchen überdeckten Anzahl von Pixeln entspricht, beschränkt werden.

Bevorzugt kann der Durchmesser des Airyscheibchens auf dem Matrixsensor größer sein als die dreifache Gitterkonstante, sodass schließlich ein Verfahren durchgeführt werden kann, welches in seiner letzten Stufe einem ISM gleichkommt.

SPAD-array-Sensoren sind insbesondere dazu geeignet, Fluoreszenzlebensdauerinformation mittels TCSPC (time correlated single photon counting) oder "histogramming" oder "time windowed detection" zu messen (FLIM = Fluorescence Lifetime Imaging Microscopy). Notwendig dafür sind eine gepulste Anregung und ein entsprechend konfigurierter Sensor. Dieses und die Kombination mit einem Airyscan-Verfahren ist beispielsweise beschrieben in Nat Methods 16, 175-178 (2019). https://doi.org/10.1038/s41592-018-0291-9.

Mit der vorliegenden Erfindung wird darüber hinaus eine spektrale Auflösung möglich. Gerade diese Kombination ist sehr attraktiv.

Bei einer bevorzugten Variante des erfindungsgemäßen Verfahrens werden mit dem Matrixsensor, zum Beispiel mit einigen Pixeln des Matrixsensors und insbesondere mit jedem einzelnen Pixel des Matrixsensors, zeitaufgelöste Messungen zur Bestimmung von Fluoreszenzlebensdauern der Farbstoffe durchgeführt.

Eine vorteilhafte Weiterbildung der erfindungsgemäßen Detektionsvorrichtung zeichnet sich dadurch aus, dass der Matrixsensor und die Auswerteelektronik, insbesondere für die Bestimmung von Fluoreszenzlebensdauern von Farbstoffen, eingerichtet sind zum Durchführen von zeitaufgelösten Messungen, zum Beispiel mit einigen Pixeln des Matrixsensors und bevorzugt mit jedem einzelnen Pixel des Matrixsensors.

Der Matrixsensor und die Elektronik sollten also für diesen Einsatz so ausgelegt sein, dass bevorzugt mit jedem Pixel eine zeitaufgelöste Messung derart möglich ist, dass damit eine Bestimmung der Fluoreszenzlebensdauern möglich wird. Diese Varianten der vorliegende Erfindung ermöglichen also die Kombination von spektral aufgelöstem FLIM mit dem Image Scanning. Zweckmäßig werden für diese Messungen gepulste Laser verwendet.

Zum Erhöhen der Detektionseffizienz des Matrixsensors kann vor dem Matrixsensor also strahlaufwärts von dem Matrixsensor, eine Mikrolinse angeordnet sein.

Zum Variieren einer Abbildung des Emissionslichts, insbesondere zum Skalieren der spektralen Bandbreite pro Pixel, kann die Abbildungsoptik der erfindungsgemäßen Detektionsvorrichtung ein Zoom-System aufweisen.

Schließlich können in grundsätzlich bekannter Weise bei dem erfindungsgemäßen Mikroskop Mittel zum Ausblenden von Anregungslicht, insbesondere mindestens ein Emissionsfilter, vorhanden sein. Bevorzugt kann eine Wechseleinrichtung, beispielsweise ein Filterrad, mit einer Mehrzahl von Emissionsfiltern vorhanden sein. Die erfindungsgemäße Detektionsvorrichtung ermöglicht aber auch Verfahrensvarianten, bei denen spektral unerwünschte Komponenten des Emissionslichts nicht ausgewertet werden. Hierzu können beispielsweise die entsprechenden Pixel, insbesondere Pixelspalten, des Matrixsensors passiv oder nichtaktiv gestellt werden.

Weitere Vorteile und Merkmale des erfindungsgemäßen Verfahrens, der erfindungsgemäßen Detektionsvorrichtung und des erfindungsgemäßen Laser-Scanning-Mikroskops werden im Folgenden mit Bezug auf die beigefügten Figuren erläutert. Hierin zeigen:

Figur 1: eine schematische Ansicht eines erfindungsgemäßen Laser-Scanning-Mikroskops;

Figur 2: eine schematische Ansicht einer erfindungsgemäßen Detektionsvorrichtung;

Figur 3: ein Diagramm zur Veranschaulichung des Durchmessers eines Airyscheibchens in Abhängigkeit der Wellenlänge für verschiedene numerische Aperturen;

Figur 4: ein Diagramm zur Veranschaulichung des Verlaufs des Dispersionswinkels bei einem Beugungsgitter in Abhängigkeit der Wellenlänge;

Figur 5: ein Diagramm mit einem Emissionsspektrum eines typischen Farbstoffs;

Figur 6: ein Diagramm zur Veranschaulichung des Verlaufs einer Detektionspunktverteilungsfunktion über eine Mehrzahl von Pixeln des Matrixsensors in einer Richtung senkrecht zur Dispersionsrichtung;

Figur 7: ein simuliertes Bild (Figur 7a), ein Diagramm zur Veranschaulichung der Zählrate aufgetragen gegen die Pixelnummer in einer Pixelspalte (Figur 7b) und ein Diagramm zur Veranschaulichung der Zählrate aufgetragen gegen die Pixelnummer in Dispersionsrichtung (Figur 7c);

Figur 8: ein aus vielen simulierten Bildern kumuliertes Bild (Figur 8a), ein Diagramm zur Veranschaulichung der gemittelten Zählrate aufgetragen gegen die Pixelnummer in einer Pixelspalte (Figur 8b) und ein Diagramm zur Veranschaulichung einer gemittelten Zählrate aufgetragen gegen die Pixelnummer in Dispersionsrichtung (Figur 8b);

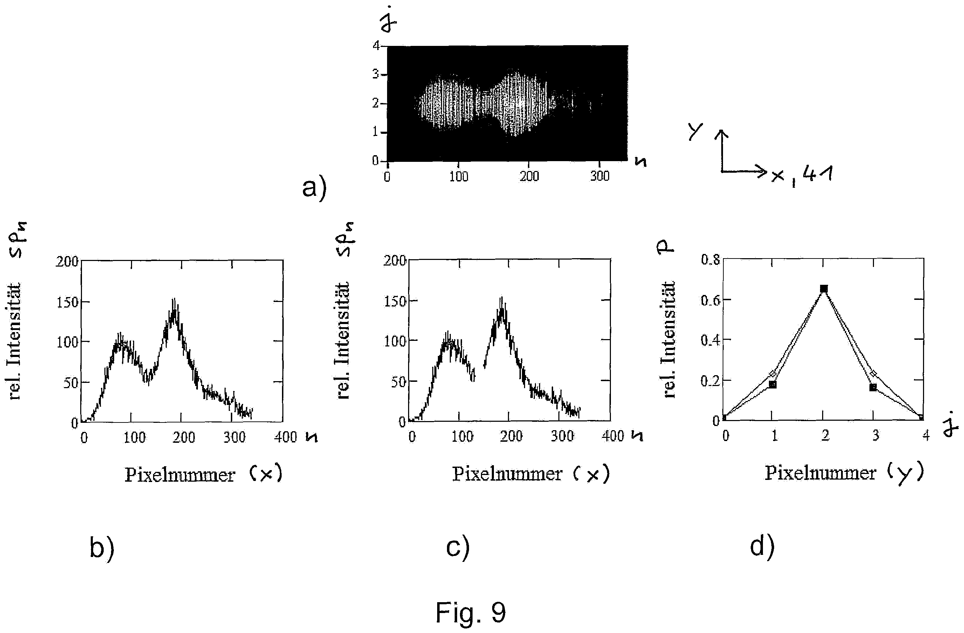

Figur 9: ein aus vielen simulierten Bildern kumuliertes Bild bei Anwesenheit von zwei Farbstoffen in der Probe (Figur 9a), ein Diagramm zur Veranschaulichung der gemittelten Zählrate aufgetragen gegen die Pixelnummer in Dispersionsrichtung für die beiden Farbstoffe (Figur 9b), ein Diagramm zur Veranschaulichung der gemittelten Zählrate aufgetragen gegen die Pixelnummer in Dispersionsrichtung mit spektraler Beschränkung auf die Emissionsbereiche der Farbstoffe (Figur 9c) und ein Diagramm zur Veranschaulichung der gemittelten Zählrate aufgetragen gegen die Pixelnummer in den zu den Emissionsmaxima der beiden Farbstoffe jeweils gehörenden Pixelspalten (Figur 9d);

Figur 10:     eine schematische Darstellung eines Matrixsensors ohne spektrale Auflösung zur Erläuterung des Prinzips des Pixel-Reassignment;

Figur 11:     eine schematische Darstellung eines Matrixsensors einer erfindungsgemäßen Detektionsvorrichtung zur Erläuterung der Pixel-Bereiche und des grundlegenden Ziels der Erfindung; und

Figur 12:     eine schematische Darstellung eines Matrixsensors für eine erfindungsgemäße Detektionsvorrichtung zur Erläuterung des Prinzips des Pixel-Reassignment bei spektraler Auflösung.

Gleiche und gleichwirkende Komponenten sind in den Figuren in der Regel mit denselben Bezugszeichen gekennzeichnet.

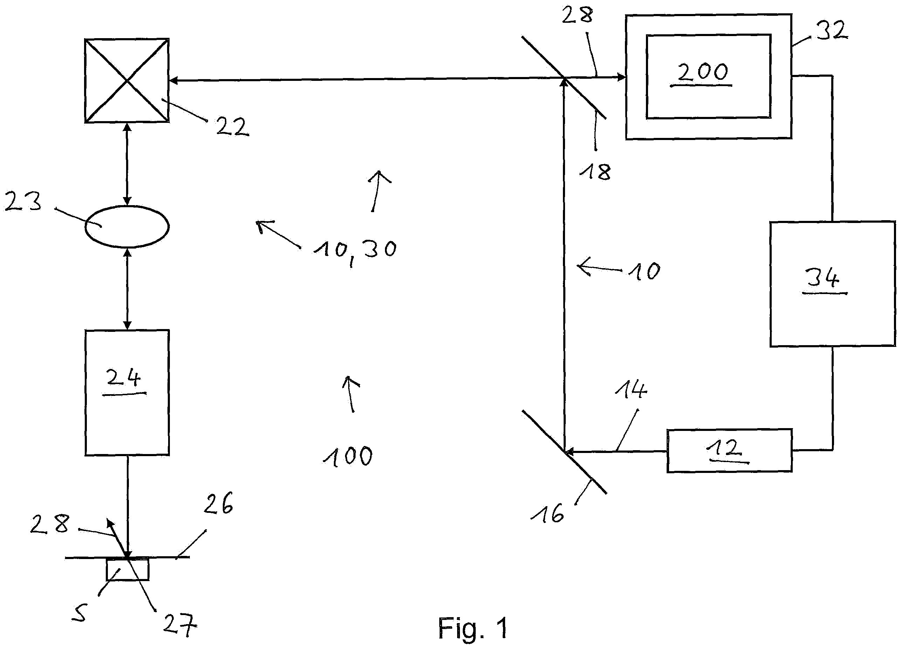

Figur 1 zeigt eine schematische Darstellung eines erfindungsgemäßen Laser-Scanning-Mikroskops 100. Als wesentliche Komponenten weist dieses Mikroskop 100 zunächst eine Lichtquelle 12, insbesondere einen Laser, zum Aussenden von Anregungslicht 14, einen Anregungsstrahlengang 10 mit einem Mikroskopobjektiv 24 zum Leiten des Anregungslichts auf oder in eine zu untersuchende Probe S und eine Scaneinrichtung 22 im Anregungsstrahlengang 10 zum Scannen mindestens eines Beleuchtungsspots 27 über die Probe S auf. Zum Leiten von von der Probe S infolge der Beaufschlagung mit der Anregungsstrahlung 14 abgestrahltem Emissionslicht 28, insbesondere Fluoreszenzlicht, auf eine Detektionseinheit 32 ist außerdem ein Detektionsstrahlengang 30 mit der Detektionseinheit 32 zum Nachweisen des Emissionslichts 28 vorhanden. Zum Trennen von Anregungslicht 14 und Detektionslicht 28 dient der erfindungsgemäß vorhandene Hauptfarbteiler 18. Schließlich ist eine Steuer- und Auswerteeinheit 34 vorhanden, bei der es sich insbesondere um einem PC handeln kann, zum Ansteuern der Lichtquelle 12 und zum Auswerten von von der Detektionseinheit 32 gewonnenen Messdaten. Erfindungsgemäß beinhaltet die Detektionseinheit 32 eine erfindungsgemäße Detektionsvorrichtung 200.

Von der Lichtquelle 12 ausgesandtes Anregungslicht 14 gelangt über einen Umlenkspiegel 16 zum Hauptfarbteiler 18 und wird an diesem in Richtung der Scaneinrichtung 22, die in einer zur hinteren Pupille des Mikroskopobjektivs 24 optisch konjugierten Ebene angeordnet sein kann, geleitet. Von der Scaneinrichtung 22 gelangt das Anregungslicht 14 über ein Scanobjektiv und eine Tubuslinse zum Mikroskopobjektiv 24, welches das Anregungslicht 14 in eine Probenebene 26 auf einen Beleuchtungsspot 27 auf oder in der Probe S fokussiert. Scanobjektiv und Tubuslinse sind in Figur 1 schematisch als eine Komponente 23 dargestellt.

Der mit Anregungslicht 14 auf oder in der Probe S beaufschlagte Bereich emittiert sodann Emissionsstrahlung 28, wobei es sich typischerweise um Fluoreszenzlicht derjenigen Farbstoffe handelt, mit welchen die Probe S zuvor präpariert wurde. Die Emissionsstrahlung 28 nimmt sodann denselben Weg wie zuvor das Anregungslicht 14 in dem "descannten" Detektionsstrahlengang 30 zurück bis zum Hauptfarbteiler 18, wird von diesem aber transmittiert und gelangt sodann auf die Detektionseinheit 32, die eine erfindungsgemäße Detektionsvorrichtung 200 aufweist. Die von der Detektionseinheit 32 gemessenen Daten werden von der Steuer- und Auswerteeinrichtung 34 ausgewertet. Die Steuer- und Auswerteeinrichtung 34 kann außerdem zum Ansteuern der Lichtquelle 12 sowie der Scaneinheit 22 dienen.

Bei dem erfindungsgemäßen Mikroskop 100 handelt es sich insbesondere um ein konfokales Laser-Scanning-Mikroskop.

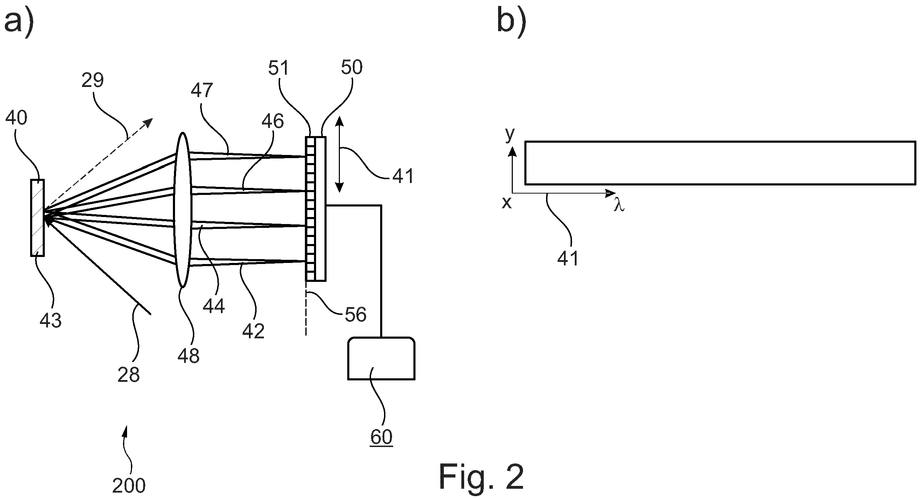

Figur 2a) zeigt eine schematische Darstellung eines Ausführungsbeispiels einer erfindungsgemäßen Detektionsvorrichtung 200. Als wesentliche Bestandteile weist die Detektionsvorrichtung 200 zum spektral aufgelösten Detektieren von Emissionslicht 28 in einem Laser-Scanning-Mikroskop 100 auf: eine Dispersionseinrichtung 40 zum spektralen Auftrennen von Emissionslicht 28, welches von der untersuchten Probe S kommt, einen zweidimensionalen Matrixsensor 50 zum ortsaufgelösten Nachweisen des spektral zerlegten Emissionslichts und eine Abbildungsoptik 48 zum Leiten des spektral zerlegten Emissionslichts auf den zweidimensionalen Matrixsensor 50.

Bei dem in Figur 2a) dargestellten Ausführungsbeispiel ist die Dispersionseinrichtung 40 ein Strichgitter 43, genauer gesagt ein Reflexionsgitter, wobei das zu detektierende Emissionslicht 28 schräg von unten auf das Strichgitter 43 einfällt. Anstelle des Gitters 43 kann auch ein Prisma oder ein Grisma verwendet werden. Entscheidend ist eine definierte spektrale Ausschmierung des Signals auf dem Matrixsensor 50, die hinsichtlich der Wellenlängenverteilung über dem Ort grundsätzlich sowohl linear als auch nichtlinear sein kann. Sie muss nur monoton sein. Die Striche des Gitters 43 verlaufen im gezeigten Ausführungsbeispiel senkrecht zur Zeichenebene, was zu einer spektralen Aufspaltung in einer in Figur 2a) vertikal verlaufenden Dispersionsrichtung 41 führt. Licht der nullten Beugungsordnung ist mit dem Bezugszeichen 29 gekennzeichnet. Das Licht der nullten Beugungsordnung 29 kann entweder nicht verwendet werden oder zur Erhöhung der Detektionseffizienz, gegebenenfalls unter Drehung der Polarisation, entlang des einfallenden Lichts erneut auf das Gitter 43 geleitet werden.

Durch ein nicht dargestelltes Pinhole konfokal gefiltertes Emissionslicht 28 wird durch eine ebenfalls nicht dargestellte Optik kollimiert und auf die Dispersionseinrichtung 40 gelenkt. Die einzelnen spektralen Komponenten 42, 44, 46, 47 treffen sodann auf die Abbildungsoptik 48, die in Figur 2a) schematisch als Einzellinse dargestellt ist. Prinzipiell kann die Abbildungsoptik 48 auch mehrere strahlformende Komponenten und insbesondere auch ein Zoom-System aufweisen.

Die Abbildungsoptik 48 fokussiert die unterschiedlichen spektralen Komponenten 42, 44, 46, 47 auf den Matrixsensor 50 mit einer Vielzahl von Pixeln 51. Der Matrixsensor 50 kann beispielsweise eine SPAD-Multizeilen-Kamera mit beispielsweise 5 Zeilen mit jeweils 800 Pixeln, entsprechend 800 Spalten, sein.

Figur 2b) zeigt eine schematische Darstellung der Fläche des Matrixsensors 50. Der Matrixsensor 50 ist relativ zu dem Gitter 43 so positioniert, dass die Dispersionsrichtung 41 in Richtung der Zeilen, also parallel zur x-Richtung des in Figur 2b) gezeigten Koordinatensystems verläuft. Die Richtung der Spalten verläuft parallel zur y-Richtung. Beispielsweise können sich in Figur 2b) die blauen Spektralanteile am linken und die roten Spektralanteile entsprechend am rechten Rand des Spektrums befinden. Mit den Indizes *i* und *j* werden die Spalten bzw. die Zeilen des Matrixsensors 50 bezeichnet, d.h. das Pixel *(i, j)* ist das Pixel in der i-ten Spalte in der j-ten Zeile.

Schematisch dargestellt ist in Figur 2a) die erfindungsgemäß vorhandene Auswerteelektronik 60, die mit dem Matrixsensor 50 verbunden und eingerichtet ist, bei der Auswertung der von den Pixeln *(i, j)* eines Pixelbereichs gemessenen Intensitäten $I_{i,j}$ die spektrale Auftrennung für diese Pixel *(i, j)* zurückzunehmen. Diese Funktionen werden im Folgenden im Einzelnen erläutert.

Die Auswerteelektronik 60, welche auch einen Datengrabber umfassen kann, kann beispielsweise in einem FPGA, in einem Mikrocontroller oder vergleichbaren Komponenten verwirklicht sein. Wesentlich ist, dass möglichst hardwarenah, also möglichst nahe bei dem Matrixsensor 50 eine Reduktion des Datenvolumens erreicht wird, damit die Daten von der Auswerteelektronik 60 möglichst kontinuierlich zu einem Steuer-PC, insbesondere also zu der Steuer- und Auswerteeinheit 34 des erfindungsgemäßen Mikroskops 100 aus Figur 1, abfließen können.

Man kann die Situation in Figur 2a) auch so beschreiben, dass das Dispersionselement 40 in der Dispersionsrichtung 41 einen großen definierten Farbfehler erzeugt, so dass die verschiedenen Wellenlängen auseinandergezogen und damit separiert detektierbar werden. In der Richtung senkrecht dazu, also in Figur 2b) in y-Richtung, bleibt die Punktverteilungsfunktion im Wesentlichen unverändert. Das spektrale Dispergieren des Emissionslichts 28 zerstört die Punktverteilungsfunktion jedoch derart, dass nicht offensichtlich ist, wie mit einem solchen System ISM-Bildgebung erreicht werden soll.

Um dies nun zu erreichen, wird zunächst die Abbildungsoptik 48 relativ zu den Dimensionen des Matrixsensors 50, im gezeigten Beispiel also zu den Dimensionen der SPAD-Kamera dimensioniert. Beispielsweise kann der Matrixsensor 50 einen Pixelpitch, den man auch als Gitterkonstante des Matrixsensors 50 bezeichnen kann, von $a = 25\,\mu m$ aufweisen.

Der Durchmesser eines Airyscheibchens hängt von der Wellenlänge des Lichts und der numerischen Apertur bekanntermaßen wie folgt ab:

$$d_{Airy} = \frac{1.22\lambda}{NA}$$

$$(1)$$

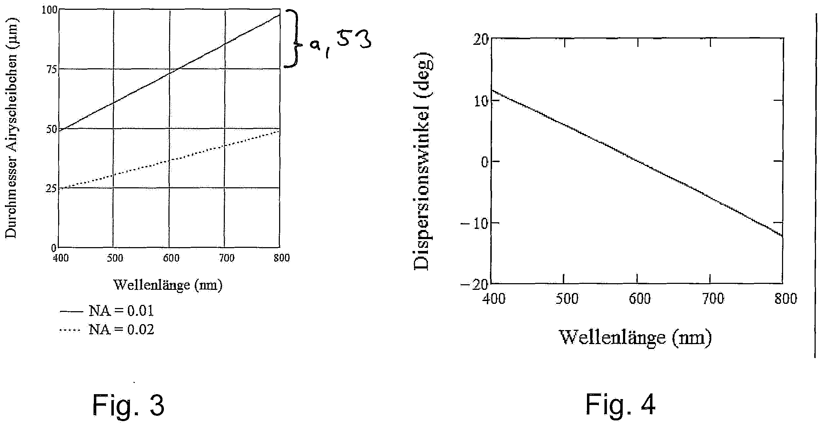

Zur Auswertung des Signals für ISM wird eine Überabtastung der Punktverteilungsfunktion von mindestens drei bis vier Pixeln pro Raumrichtung benötigt. Um dieses für den relevanten Wellenlängenbereich von 450 nm bis 800 nm zu erreichen, wird eine detektionsseitige numerische Apertur bei Beleuchtung des Sensors von etwa NA = 0.01 benötigt. Dieses ergibt sich aus dem Diagramm der Figur 3, wo der Durchmesser eines Airyscheibchens in Abhängigkeit der Wellenlänge für verschiedene numerische Aperturen dargestellt ist. Das Raster der y-Achse bei dem Diagramm der Figur 3 entspricht dabei der angenommenen Pixelgröße von 25 $\mu m$ der SPAD-Kamera.

Figur 4 zeigt den Verlauf des Dispersionswinkels in Grad über die Wellenlänge in nm für ein Gitter mit 1000 Linien/mm. Nimmt man beispielsweise eine Brennweite von f = 50 mm für die Abbildungsoptik 48 zwischen dem Gitter 43 und der SPAD-Kamera 50, ergibt sich bei dem genannten Spektralbereich eine Verteilung des Spektrums über etwa 730 Pixel. Damit ist die auf einen Pixel 51 abgelegte spektrale Bandbreite etwa $\Delta\lambda$(Pixel) = 0,5 nm.

Im Grundsatz müssen die verschiedenen spektralen Anteile numerisch integriert werden, um aus der dispersiv verschmierten Signalverteilung die Punktbildverteilungsfunktion zurückzugewinnen. Hat man die Intensitäten der Pixel auf diese Art gewonnen, kann man in einem nächsten Schritt das Verfahren der Image Scanning Microscopy (ISM) anwenden.

Die auf ein bestimmtes Pixel 51 einfallende Intensität wird mit $I_{i,j}$ bezeichnet, wobei der Index *i* die Nummer der Spalte bezeichnet, also in x-Richtung und in der Dispersionsrichtung 41 läuft. Der Index *j* bezeichnet die Nummer der Zeile und läuft also y-Richtung.

Die Intensität $I_{i,j}$ kann geschrieben werden:

$$I_{i,j} = \int_{\Delta\lambda} Sp(\lambda) \left[ \int_{\Delta x_i} Airy(x - x_0(\lambda), \lambda)dx \int_{\Delta y_j} Airy(y - y_0(\lambda), \lambda)dy \right] d\lambda$$

$$(2)$$

Dabei ist $Sp(\lambda)$ das Emissionsspektrum des angeregten Fluoreszenzfarbstoffs und *Airy (x,$\lambda$)* ist die Airyfunktion, die der räumlichen Intensitätsverteilung der Punktverteilungsfunktion entspricht, wobei die Wellenlänge $\lambda$ in der Airyfunktion einen Parameter darstellt, der insbesondere die Breite der Airyfunktion *Airy(x, $\lambda$)* bestimmt, $x_0$ bezeichnet das Zentrum der Punktverteilungsfunktion. Durch die Dispersion $x_0(\lambda)$ und durch eine Justierung durch optische Mittel auf eine Spaltenmitte $y_0$ ist sodann das Zentrum der Punktverteilungsfunktion, also der Punkt maximaler Intensität, festgelegt.

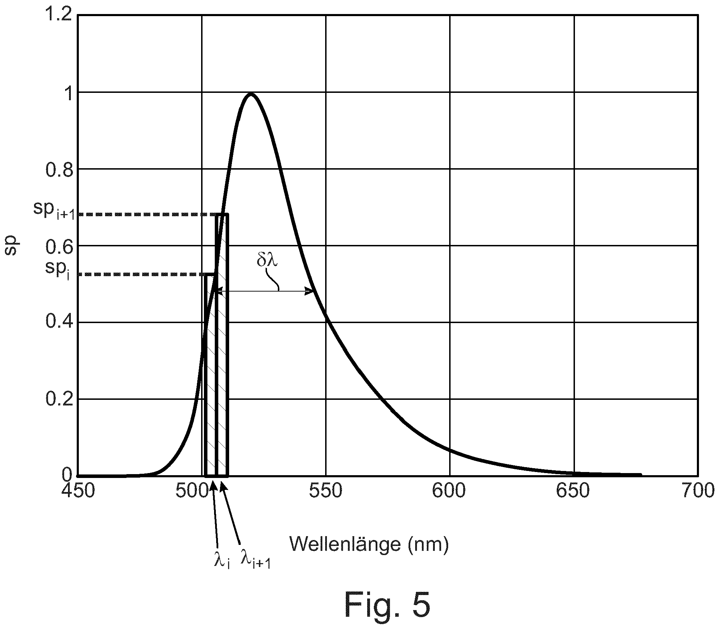

Typischerweise haben die Spektralverteilungen von gängigen Fluoreszenzfarbstoffen (Fluorophoren) spektrale Bandbreiten von etwa $\delta\lambda$ = 50 nm (siehe Figur 5). Die Änderung der Breite der Airyfunktion über diese Bandbreite ist gemäß der Grafik in Figur 3 deutlich kleiner als 10 $\mu$m. Setzt man also für die Punktverteilungsfunktion die Breite des spektralen Emissionsschwerpunkts bei $\lambda_0$, macht man einen Fehler von maximal einem Viertel Pixel, der insbesondere in den schwach emittierenden Randbereichen des Spektrums auftritt und demnach wenig beiträgt. Man kann also in guter Näherung *Airy(y-y_0, $\lambda$)* ersetzen durch *Airy(y-y_0, $\lambda_0$)*. Damit wird der PSF-Term entlang der y-Koordinate unabhängig von $\lambda$ und lässt sich aus dem Integral über die $\lambda$-Koordinate herausziehen.

Es verbleibt jetzt noch ein eindimensionales Entfaltungsproblem, um das spektrale Verschmieren in der x-Richtung in Kenntnis des Spektrums $Sp(\lambda)$ des angeregten Fluoreszenzfarbstoffs auf die ungestörte Airyfunktion zurückzurechnen. Der Rechen- und Hardwareaufwand ist dabei nicht zu unterschätzen. Immerhin muss das Signal von mindestens 4 $\times$ 730 Pixeln ausgewertet werden.

Um die Verrechnungslast der Auswerteelektronik 60 weiter zu reduzieren, können weitere Annahmen getroffen werden wie folgt. Zunächst wird angenommen, dass die ungestörte Punktverteilungsfunktion radialsymmetrisch ist. Das bedeutet, dass die räumliche Ausdehnung der Punktverteilungsfunktion entlang des Spektrums in der Dispersionsrichtung 41, also in x-Richtung, aus der orthogonal dazu, also in y-Richtung, ablesbaren Intensitätsverteilung $I_j^{(y)}$ ermittelt werden kann. Zudem ist die spektrale Bandbreite pro Pixel mit $\Delta\lambda$ < 0,5 nm sehr gering, sodass in guter Näherung die dispersive Signalverschmierung aufgrund der Pixelausdehnung vernachlässigt und so das Spektrum pro Pixel als stückweise konstant angenommen werden kann. Aus der in orthogonaler Richtung, also y-Richtung, bestimmten Intensitätsverteilung kann außerdem noch die Breite des Integrationsbereichs, also die Anzahl der Pixel, über welche das Integral gebildet werden muss, ermittelt werden. Aufgrund des Diagramms in Figur 3 ist klar, dass eine Integration über fünf Pixel vollkommen ausreicht. Damit ergibt sich folgende Diskretisierung des beschriebenen Problems:

$$I_{i,j} = I_j^{(y)} \sum_{n=i-2}^{i+2} sp_n \int_{\Delta x_i} Airy(x - x_0(\lambda_n)))dx$$

$$(3)$$

Hierin ist $sp_n$ die diskretisierte Intensität des Fluoreszenzfarbstoffs an der spektralen Position des betreffenden Pixels. Es gilt jetzt noch, die Anteile von in benachbarten Pixeln zentrierten Ai$\eta$funktionen zu der am Pixel *(i, j)* gemessenen Intensität $I_{i,j}$ zu bestimmen. Auch hierzu lässt sich aus den in der orthogonalen Richtung, also in y-Richtung, gemessenen Daten eine Näherung gewinnen.

Zunächst wird vorteilhafterweise die Summe des Signals über alle Pixel senkrecht zur Dispersionsrichtung, also aller Pixel in einer Spalte, berechnet. Daraus ergibt sich das Spektrum der Emission, welches normiert werden kann, so dass sich eine Verteilung, wie in Figur 5 gezeigt ergibt. Daraus lassen sich die für die Berechnung des diskretisierten Integrals notwendigen diskretisierten Werte $sp_i$ der Spektralverteilung bestimmen. Figur 5 zeigt beispielhaft den Wert des Spektrums $sp_i$ für ein erstes Pixel *(i, j)* bei einer ersten Wellenlänge $\lambda_i$ und den Wert des Spektrums $sp_{i+1}$ bei einem unmittelbar benachbarten Pixel *(i+1,j)*, welches einer Wellenlänge $\lambda_{i+1}$ entspricht. Ist die Spektralverteilung einmal erhoben, können aus den Intensitätsverhältnissen entlang der y-Richtung die Beiträge der benachbarten Pixel *i-2, i-1,*

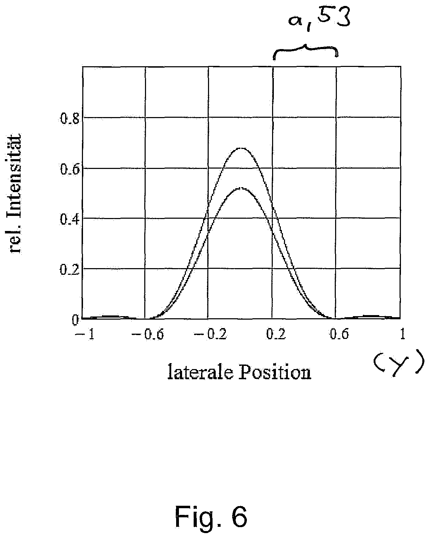

*i+1, i+2* zum Pixel *i* bestimmt werden. In dem in Figur 6 gezeigten Beispiel einer räumlichen Verteilung der Airyfunktion ergäbe sich für die fünf Pixel bei dem Wert $sp_{i+1}$ des Spektrums folgende anteilige Intensitätsverteilung:

$$I^{cal}_i = (I(i\text{-}2), I(i\text{-}1), I(i), I(i+1), I(i+2)) = (0.008, 0.16, 0.65, 0.16, 0.008)$$

Figur 6 zeigt außerdem die dem Spektrum in Figur 5 entsprechenden niedrigeren Werte der Punktverteilungsfunktion für $sp_i$ an der spektralen Position *i*, also für das zum Pixel Nummer *i+1* benachbarte Pixel *i* der SPAD-Kamera 50.

Mit den so ermittelten Werten lässt sich auch das letzte verbliebene Integral $\int_{\Delta x_i} Airy(x - x_0(\lambda_n))dx$ diskretisieren. Man erhält dann folgende Darstellung für die im Pixel *(i, j)* gemessene Intensität $I_{i,j}$:

$$I_{i,j} = \sum_{n=i-2}^{i+2} sp_n\, P_{n,j} = \sum_{n=-2}^{2} sp_{i-n}\, P_{i-n,j}$$

$$(4)$$

Hierbei ist $P_{n,j}$ der ermittelte Anteil der Intensität der an einem benachbarten Pixel *n* zentrierten Airyfunktion am Pixel *(i, j)*. Die Beiträge von $I_j^{(y)} * \int_{\Delta x_i} Airy(x - x_0(\lambda_n))dx$ sind in $P_{n,j}$ enthalten. Als letzter Schritt verbleibt noch eine Umsortierung der Intensitätsinhalte der Pixel auf die über dem Summenzeichen aufgespannten Verschiebungen n. Denn letztendlich interessiert nicht das Signal eines bestimmten Pixels *(i, j)*, sondern die Summe von zusammengehörigen Samplinganteilen der Punktverteilungsfunktion für einen Fluoreszenzfarbstoff. Die Indexumsortierung entspricht physikalisch einem Verschieben der spektral dispergierten Emissionspunktverteilungsfunktionen auf eine gemeinsame Referenzposition, wie es auf optischem Weg beispielsweise durch einen zweiten Durchlauf durch ein Dispersionsprisma erreicht werden kann. Damit ergibt sich folgender Ausdruck für die allein aus gemessenen Daten ermittelte Punktverteilungsfunktion:

$$I|_{n=-2,..,2,j} = \sum_i sp_{i-n}\, P_{i-n,j}$$

$$(5)$$

Bei einem photonenzählenden Matrixsensor im Geiger-Mode ordnen die $P_{i-n,j}$ die pro Matrixsensorpixel detektierten Photonen $N_{i-n,j}$ gemäß der zuvor einkalibrierten spezifischen Verteilung der PSF an gegebener Sensorposition den Subpixeln der zu bestimmenden PSF folgendermaßen zu:

$$P_{i-n,j} = I^{cal}_{i-n} \cdot N_{i-n,j}$$

$$(6)$$

Damit ist die erfindungsgemäße Rücknahme der spektralen Aufspaltung für die Pixel des zu dem betrachteten Farbstoff gehörenden Pixelbereichs verwirklicht.

Sollte der durch die Vernachlässigung der dispersiven Signalverschmierung erzeugte Fehler zu groß erscheinen, kann mit einem größeren Sensorarray und einer größeren Brennweite der Abbildungsoptik gegengesteuert werden. Mit einem Array von beispielsweise 4 × 1400 Pixeln und einer Brennweite von f = 100 mm ist die Bandbreite pro Pixel

schon $\Delta\lambda$ < 0.25 nm. Es lässt sich somit in jedem Fall ein vernünftiger Arbeitspunkt finden. Der Matrixsensor 50 muss nicht auf wenige Zeilen begrenzt sein. Wenn eine hohe Bildrate erreicht werden kann, sind auch deutlich mehr Bildzeilen erlaubt, wodurch dann auch Messungen mit Multipunktanregung möglich werden. Eine derartige Parallelisierung kommt dem erfindungsgemäßen Verfahren entgegen, weil die Pixelverweilzeiten dann bei gegebener Bildrate um den Faktor der Parallelisierung verlängert werden können.

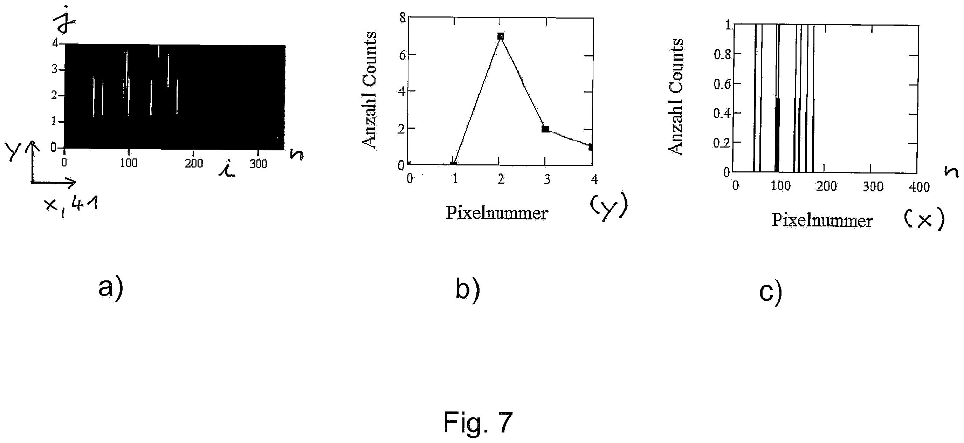

Problematisch für die Anwendung des oben beschriebenen Prinzips ist die Limitierung der Photonenzahl im LSM. Der Matrixsensor 50 liefert digitale Signale, also Photonen pro Sensorpixel und Bild. Ein einziges Bild des Matrixsensors 50 wird später zu einem Pixel eines gesamten LSM-Bilds gewandelt. Da der auf den Matrixsensor 50 treffende Photonenstrom beispielsweise von der Größenordnung einiger Megahertz sein kann und die Pixelverweilzeit des LSM in der Größenordnung von einer $\mu$s liegen soll, werden insgesamt nur wenige Photonen pro Pixelverweilzeit auf die beispielsweise 4x730 Pixel verteilt. Die meisten Pixel des Matrixsensors 50 werden demnach als Datum eine Null liefern und nur wenige Pixel eine Eins. Daher kann das direkte einmalige Auslesen des Matrixsensors 50 noch kein verwertbares Ergebnis liefern. Außerdem sind Emission und Detektion der Photonen statistische Ereignisse, so dass sich aus einem Einzelbild mit einer so geringen Photonenzahl die Verteilung der Photonen im Langzeitmittel noch nicht ableiten lässt. Das ist in Figur 7a) illustriert, wo ein Einzelbild einer SPAD-Kamera 50 für die Belichtung mit dem Farbstoffspektrum aus Figur 5 bei einem Photonenstrom von Iphot = 10 MHz für eine Belichtungsdauer von 1 $\mu$s simuliert wurde. Die spektrale Bandbreite pro Pixel beträgt 0,5 nm. Es sind nur wenige Ereignisse zu sehen, die sich um das Emissionsmaximum des Farbstoffs bei etwa 520 nm und auf die zentrale Zeile der fünfzeiligen SPAD-Kamera 50 gruppieren. Figur 7b) zeigt die Summe der Signale jeweils entlang der Bildzeilen (in x-Richtung) der SPAD-Kamera 50, welche die Punktverteilungsfunktion wiedergibt. Figur 7c) zeigt die Summe der Zählereignisse aller Pixel in einer Spalte, also in y-Richtung, und ist identisch mit dem detektierten Spektrum des Farbstoffs. Offensichtlich ist der oben erläuterte Algorithmus auf die Daten der Figur 7 noch nicht sinnvoll anwendbar.

Das System muss demnach mit einem aufintegrierten Bild kalibriert werden. Das ist aber grundsätzlich ein sehr schneller Vorgang und benötigt in der Regel nicht mehr als einen Bildscan. In Figur 8a) ist das für eine Mittelung von 1000 Einzelbildern mit einem mittleren Photonenstrom von 10 MHz illustriert. Die Integrationsdauer beträgt dann nur 1 ms und entspricht etwa dem Scan einer Bildzeile. Die aus dem aufsummierten Signal bestimmte Punktverteilungsfunktion in Figur 8b) gibt die oben beschriebene zu erwartende Intensitätsverteilung über die fünf Pixel schon fast exakt wieder und auch das Spektrum in Figur 8c) lässt sich schon nachvollziehen.

Aus den Messungen der Figuren 8b) und 8c) können Daten für $sp_{i-n}$ und $P_{i-n,j}$ gewonnen werden, die beispielsweise in einem Speicher der Auswerteelektronik 60 abgelegt werden können. Die SPAD-Bilder pro gescanntem Bildpixel können dann entsprechend der Vorschrift (Gleichung 5) ausgewertet werden. Ganzzahlige Photonenzahlwerte können bereits in Gleitkommawerte gewandelt werden, um das Helligkeitsverhältnis zu erhalten.

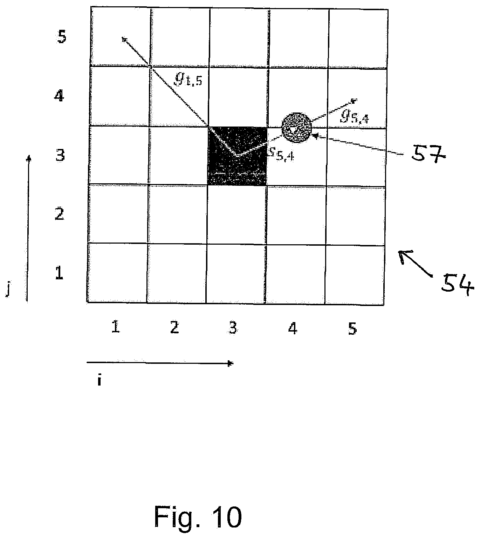

Eine zweite Möglichkeit, wie für die Pixel eines Pixelbereichs, der einem Farbstoff zugeordnet wird, die spektrale Auftrennung erfindungsgemäß zurückgenommen werden kann, beruht auf dem Verfahren des Pixel-Reassignment. Sie wird mit Bezug auf die Figuren 10 bis 12 beschrieben.

Zunächst erläutern wir anhand von Figur 10 das an sich bekannte Verfahren des Pixel-Reassignment, wobei sich die Darstellung in der Terminologie orientiert an [Castello et al. 2019]).

Betrachtet wird die Situation des Image-Scanning, bei dem eine Probe mit einer punktförmigen Beleuchtungsquelle abgerastert wird und die von der Probe zurückgestrahlte Intensität mit einem relativ zur Probe fixierten konfokalen zweidimensionalen Detektorarray ortsaufgelöst gemessen wird. Der konfokale Matrixsensor möge *n-mal m* Pixel *(i, j)* aufweisen mit Indizes *i, j,* die von 1 bis *n* beziehungsweise *m* laufen.

Weil wir später die spektralen Messungen auf einem rechteckigen Array auswerten wollen, werden wir hier der Einfachheit halber von einem rechteckigen Array ausgehen. Das ist aber an sich keine Einschränkung und prinzipiell können auch andere Geometrien von pixelierten Sensoren betrachtet werden. Insbesondere werden oft hexagonale Anordnungen verwendet, weil sich mit diesen ein guter Füllfaktor verwirklichen lässt.

Sodann gehen wir für eine übersichtliche Darstellung davon aus, dass die Vergrößerung von der Objektebene in die Zwischenbildebene 1 ist. Außerdem ist die Annahme sinnvoll, dass jedes Pixel des Sensors kleiner ist als 1 Airy Einheit (airy unit = AU). Dieser Fall entspricht der Standardannahme im Image Scanning, dass die PSF räumlich überabgetastet detektiert wird und dass jedes Pixel ein effektives Pinhole darstellt, das kleiner als 1 AU ist (oder kleiner als 0,8 AU oder, noch besser, kleiner als 0,3 AU), siehe oben. Die Anordnung funktioniert im Prinzip auch bei einer PSF kleiner als die Pixelgröße. Allerdings kann man dann nur das Spektrum messen und spektrale konfokale Bilder aufnehmen. Image scanning ist dann nicht sinnvoll einsetzbar.

Das Image-Scanning-Mikroskop kann als lineares und rauminvariantes System angesehen werden, d. h. dass die Probenebene linear in die Bildebene 56 des Matrixsensors abgebildet wird. Mit der Variablen *x* soll der in die Probenebene zurückprojizierte Ort in der Bildebene 56, also der Ebene des Matrixsensors bezeichnet werden. Wenn sich die Scanningposition an der Stelle *x* in der Probe befindet, wenn also, mit anderen Worten, das Maximum der Beleuchtungsintensität am Ort x in der Probe ist, kann die mit dem Pixel *(i, j)* gemessene Intensität $g_{i,j}(x)$ als Faltung beschrieben werden wie folgt:

$$g_{i,j}(\boldsymbol{x}) = (h_{i,j} * f)(\boldsymbol{x})$$

$$= \int h_{i,j}(\boldsymbol{x} - \boldsymbol{x}')f(\boldsymbol{x}')d\boldsymbol{x}'$$

$$(7)$$

Dabei ist $h_{i,j}(\boldsymbol{x}) = h^{exc}(\boldsymbol{x})h^{em}(\boldsymbol{x} - \boldsymbol{d}_{i,j})$ die effektive PSF für das jeweils betrachtete Sensorpixel. $h_{i,j}(\boldsymbol{x})$ ist das Produkt der PSF $h^{exc}(\boldsymbol{x})$ der Anregung und der PSF der Emission $h^{em}(\boldsymbol{x} - \boldsymbol{d}_{i,j})$. Die PSF $h^{exc}(\boldsymbol{x})$ der Anregung kann im Prinzip gemessen werden und kann als bekannt vorausgesetzt werden. Um eine korrekte PSF der Detektion zu erhalten, müsste $h^{em}(\boldsymbol{x} - \boldsymbol{d}_{i,j})$ bei nicht vernachlässigbarer Größe eines einzelnen Pixels noch mit der Blendenfunktion , die die geometrische Form des Pixels beschreibt, gefaltet werden. $\boldsymbol{d}_{i,j}$ ist ein in der Ebene des Detektorarrays liegender Vektor, der dem Versatz zwischen dem Referenzelement, beispielsweise einem Element in der Mitte des Sensors, zu dem Pixel $(i, j)$ entspricht. $\boldsymbol{d}_{i,j}$ kann also geschrieben werden als

$$\boldsymbol{d}_{i,j} = \begin{pmatrix} d_{i,j}^{x} \\ d_{i,j}^{y} \end{pmatrix}$$

$$(8)$$

In einer vereinfachten Betrachtung kann man davon ausgehen, dass das Maximum der effektiven PSF $h_{i,j}(\boldsymbol{x})$ etwa in der Mitte zwischen den Maxima der Funktionen $h^{exc}(\boldsymbol{x})$ und $h_{i,j}(\boldsymbol{x} - d_{i,j})$ liegt, also etwa an einer Position $\boldsymbol{s}_{i,j} = \boldsymbol{d}_{i,j}/2$. Exakt würde das bei einem aberrationsfreien System gelten, wenn die PSF der Anregung und die PSF der Emission identisch wären, was bei einer Fluoreszenz ohne Stokes-Shift der Fall wäre. Die Grundidee des Pixel-Reassignment geht davon aus, dass der größte Teil der mit dem Pixel $(i, j)$ gemessenen Intensität von einem Ort in der Probe stammt, der nicht mit der Ortskoordinate des betreffenden Pixels in der Bildebene 56 korrespondiert. In der vereinfachten Betrachtung, bei der man davon ausgeht, dass die effektive PSF ihr Maximum in der Mitte zwischen den Maxima der Funktionen $h^{exc}(\boldsymbol{x})$ und $h_{i,j}(\boldsymbol{x} - d_{i,j})$ hat, liegt der Ort, von dem die mit dem Pixel $(i, j)$ gemessene Intensität stammt, am Ort $\boldsymbol{s}_{i,j} = \boldsymbol{d}_{i,j}/2$ in der Probenebene.

Die Grundidee des Pixel-Reassignment und des Image-Scanning ist, die gegenüber dem Referenzpixel verschobenen Signale in Richtung des Referenzpixels zurückzuschieben und zu addieren. Das ist im Prinzip intuitiv klar, weil im so betriebenen konfokalen System jedes Pixel $(i, j)$ des Matrixsensors ein verschobenes Bild liefert. Neben dem Zurückschieben kann man die Bilder auch einfach aufeinander registrieren oder andere Formen der Verrechnung, wie zum Beispiel Multiview-Entfaltungen, nutzen, um Signale aller Pixel miteinander vorteilhaft zu verrechnen.

Figur 10 zeigt die Situation und die Bezeichnungen für den Fall des konfokalen Image Scanning anhand eines Matrixsensors 54 mit 5x5 Pixeln. Das Pixel $(3, 3)$ in der Mitte dient als Referenzpixel. Der Kreis 57 stellt den Schwerpunkt der effektiven PSF für das Pixel (S, $4$) dar. Allerdings ist die Ausdehnung der PSF in der Regel deutlich größer als dieser Kreis 57, der in Figur 10 nur zur Veranschaulichung der Position des Maximums der PSF gezeigt ist.

Mit dem Image Scanning wird bekanntlich eine bessere optische Auflösung und ein verbessertes Signal-zu-Rausch-Verhältnis (SNR) erreicht. Eine Farbabhängigkeit beim Image Scanning über Filter zu bewerkstelligen ist bekannt. Bekannt ist weiterhin, ein Streifengitter zu verwenden, mit welchem eine zwei Farben enthaltende PSF gemessen und ausgewertet wird.

Es ist aber klar, dass man deutlich mehr Informationen erhält, wenn man das Spektrum direkt an mehreren Stellen misst. Dies kann weiterhin zur spektralen Entmischung der Daten dienen. Zusätzlich möchte man auch bei solchen Messungen die positiven Eigenschaften des Image Scanning nutzen können.

Mit der hier beschriebenen erfindungsgemäßen Detektionsvorrichtung kann eine Messung beispielsweise so durchgeführt werden, dass die spektralen Anteile eines bestimmten Emissionsbands, die einem Pixelbereich auf dem Matrixsensor 50 entsprechen, spektral so zusammengefasst werden, dass für dieses spektrale Band die Methode des sogenannten Image Scanning (auch bezeichnet als Airyscanning oder Optical Reassignment) durchgeführt werden kann. Dieses Zusammenfassen ist das, was in der Terminologie der unabhängigen Ansprüche als Rücknahme der spektralen Auftrennung bezeichnet wird.

Um also die Zusammenfassung der zu einem Emissionsband gehörenden Pixel zu bewerkstelligen, ist es notwendig, dass der dispersive Einfluss des Gitters oder einer anderen dispersiven Einrichtung für eine Anzahl von N zusammenhängenden Pixeln, also für die Pixel eines Pixelbereichs, zurückgenommen werden.

Das ist letzten Endes vergleichbar mit einer Situation, bei der man das Licht durch das dispersive Element wieder so zurücklaufen lässt, dass die Dispersion zurückgenommen wird. Es entstünde dann eine PSF, die nur die räumliche Information enthält und in welcher die spektralen Anteile wieder in einer Punktbildfunktion räumlich übereinanderliegen. Beschrieben ist so etwas beispielsweise in US2019258041. Allerdings ist eine Rücknahme der Dispersion mit optischen Mitteln nicht immer möglich. Beispielsweise werden zur spektralen Aufspaltung bevorzugt Gitter eingesetzt, weil diese eine lineare Dispersion erzeugen. Wegen der begrenzten Effizienz ist aber die Mehrfachnutzung eines Gitters, also sowohl auf dem Hin- als auch auf dem Rückweg des Lichts, nicht vorteilhaft. Außerdem sind rein optische Anordnungen für die Rücknahme der Dispersion komplex, teuer und justageaufwändig.

Im Fall einer linearen Dispersion, wie sie durch ein Gitter erzeugt wird, gilt für die Zuordnung der Wellenlänge entlang der Längsausrichtung x des Matrixsensors der Zusammenhang $\lambda = kx$. Hier ist keine Proportionalitätskonstante, die von der Stärke der Dispersion, d.h. von der Linienbreite des Gitters, abhängt. Die Einheit ist daher nm/mm. Die Betrachtungen gelten prinzipiell aber nicht nur für ein Gitter, sondern können auch auf ein Prisma als dispersives Element angewandt werden. Allerdings ist dann der Zusammenhang zwischen dem Ort auf dem Sensor und der Wellenlänge nicht mehr durch einen einfachen linearen Zusammenhang beschreibbar. Die Kalibrierung und die Auswertung der Messungen sind dann etwas anders.

Zudem ist die Nutzung eines Gitters bevorzugt, weil die lineare Dispersion dazu führt, dass die Abtastung des Spektrums über die Wellenlängen (Pixel pro Wellenlänge) optimal und der Zusammenhang zwischen Ort und Wellenläge linear bleibt. Die Nutzung von Prismen ist optisch unter Umständen etwas effizienter, führt aber zu einem besseren Sampling des blauen Anteils im Spektrum, während die roten Wellenlängen spektral "gestaucht" sind und daher schlechter abgetastet werden. Gerade dies ist aber nachteilig, da gerade für die Abbildung lebender Proben eine schonendere Anregung/Detektion erfolgt, je länger die gewählten Wellenlängen sind. Mehrfachfärbungen sollen gerade hier mit der erfindungsgemäßen Anordnung gut detektierbar sein.

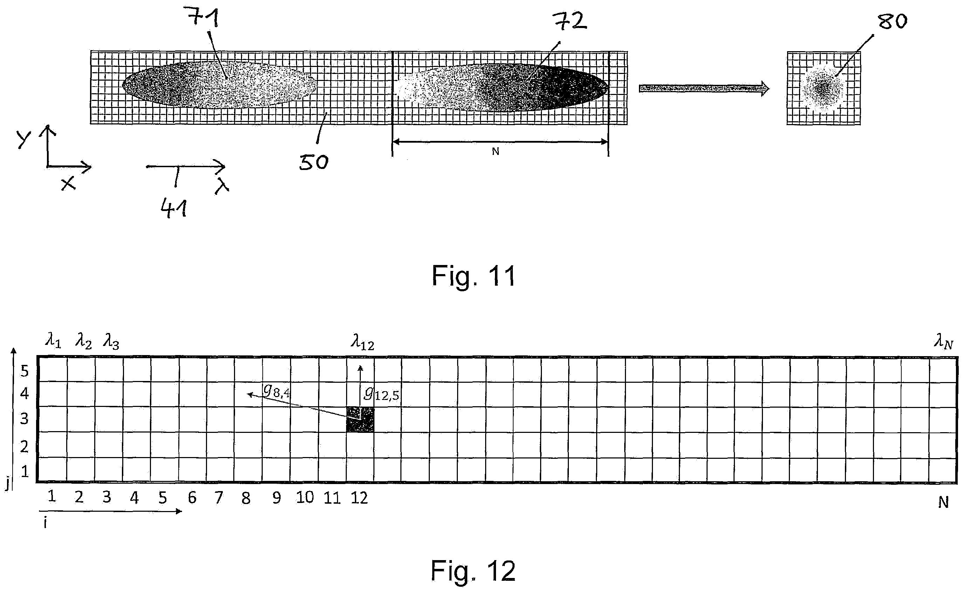

Hier soll eine beispielhafte Ausgestaltung angegeben werden. Figur 11 zeigt einen Matrixsensor mit zwei schematisch dargestellten Spektralbändern, die zum Beispiel der spektralen Signatur einer fluoreszent abstrahlenden Probe mit einem blau-grünen Emissionsbereich (Pixelbereich 71) und mit einem eher orange-roten Emissionsbereich (Pixelbereich 72) entsprechen. Die an die Datenauswertung gestellte Aufgabe ist im Prinzip, ein bestimmtes spektrales Band, mithin die Signale der Pixel eines Pixelbereichs 71 und/oder 72 so zusammenzufassen, dass eine oder zwei kreissymmetrische Punktverteilungsfunktion/en 80 (PSF) entsteht/en. Eine nachfolgende oder simultane Auswertung der so erhaltenen PSF mit an sich bekannten Methoden des Image Scanning kann zu einem Bild der Probe führen, bei dem die vorteilhaften Eigenschaften des Image Scanning kombiniert sind mit einer spektralen Auflösung, d. h. beide Farbstoffe können im Bild dargestellt werden. Um die Darstellung transparent zu halten, wurde hier zunächst angenommen, dass die Farbstoffe spektral so weit separieren, dass sie auf verschiedene Pixel des Sensors fallen. Dieser Fall ist günstig. Allerdings können mit der Anordnung auch Proben mit spektral überlappenden Farbstoffen oder fluoreszenten Proteinen abgebildet und vermessen werden. Dieses hatten wir im allgemeinen Teil der Beschreibung erläutert.

Figur 12 zeigt einen Ausschnitt aus einem Matrixsensor 50 einer erfindungsgemäßen Detektionseinheit mit Pixeln (i, j) mit denen das dispergierte Emissionslicht 28 gemessen wird. Entlang der Richtung i ist das Emissionslicht 28 dispersiv aufgespalten. Das bedeutet, dass jeder Spalte i eine Wellenlänge zugeordnet ist. Keine dispersive Aufspaltung der Wellenlänge erfolgt in der Richtung j, d. h. dort liegt nur eine räumliche Information vor.

In der in Figur 12 gezeigten Situation stellt das Pixel *(12, 3)* das Referenzpixel dar mit der zugehörigen Referenzwellenlänge $\lambda_r$, auf welches die Signale der anderen Pixel bezogen werden. Das bedeutet, dass die Signale der anderen Pixel auf das Referenzpixel *(12, 3)* in ähnlicher Weise zurückgeschoben werden, wie das bisher bei der bekannten Image Scanning Mikroskopie erfolgt. "Zurückschieben" heißt hier, die Signale der jeweiligen Pixel numerisch bestimmten Orten in der Ebene des Matrixsensors und damit in der Probenebene zuzuordnen. Im Unterschied zu den bekannten Verfahren, muss die Verschiebung hier aber so erfolgen, dass die Dispersion richtig berücksichtigt wird.

Die wesentliche Änderung besteht also darin, dass für den Verschiebungsvektor $d_{i,j}$ angenommen wird, dass der Verschiebungsweg sich aus zwei Anteilen zusammensetzt:

$$d_{i,j} = 2s_{i,j} + \xi_i$$

$$\xi = \xi(\lambda)$$

$$(9)$$

$\xi(\lambda)$ ist dabei eine Funktion der Wellenlänge. Eine mögliche Wahl für diese Funktion ist beispielsweise

$$\xi_i = \kappa \left( \frac{\lambda_i}{\lambda_r} - 1 \right)$$

(10)

Die Proportionalitätskonstante $\kappa$ hat hier die Einheit einer Länge und ist bestimmt durch die Stärke der Dispersion des dispersiven Elements, insbesondere also durch die Gitterkonstante des benutzten Gitters 43.

Damit stellt sich der Verschiebungsweg dar wie folgt:

$$\boldsymbol{d}_{i,j} = \begin{pmatrix} d_{i,j}^x \\ d_{i,j}^y \end{pmatrix} = \begin{pmatrix} 2\, s_{i,j}^x + \xi_i \\ d_{i,j}^y \end{pmatrix}$$

(11)

In diesem Beispiel betrifft die Dispersion also nur die x-Richtung. In Abbildung 12 wäre der Verschiebungsvektor für das eingezeichnete Pixel *(12, 5)* also nicht durch die Dispersion verändert, während der Verschiebungsvektor für das eingezeichnete Pixel (8, *4*) einen dispersiven Anteil aufweisen würde.

Für den Schwerpunkt der effektiven PSF erhält man dann

$$\boldsymbol{s}_{i,j} = \begin{pmatrix} \dfrac{d_{i,j}^x - \xi_i}{2} \\ \dfrac{s_{i,j}^y}{2} \end{pmatrix}$$

(12)

In der Richtung senkrecht zur Dispersion gibt es also, vergleichbar mit einer herkömmlichen Image-Scanning(Airyscanning)-Auswertung, keine Änderung, während in Richtung der Dispersion eine Streckung/Stauchung erfolgt. Diese erfolgt so, dass die Anteile, deren Wellenlänge weiter von der Referenzwellenlänge entfernt sind, stärker korrigiert werden, sodass der Schwerpunkt der effektiven PSF dann näher in die Richtung des Referenzpixels verlagert wird. Die Schwerpunkte liegen dann nicht mehr bei der halben Verschiebungslänge zwischen den Pixeln und dem Referenzpixel, sondern sind etwas näher zum Referenzpixel hin verschoben. Man hat somit eine Vorschrift, in welcher Weise man die Anteile der Pixel verschieben muss, um letztlich die Beiträge aller Pixel verrechnen zu können. Optional kann man hier auch weitere Kalibrierungen benutzen, um die korrekten $s_{i,j}$ zu ermitteln. Allerdings kann insbesondere bei dicken Proben, die häufig mit der Mehrphotonenmikroskopie untersucht werden, der Fall eintreten, dass die Verschiebungsvektoren durch probeninduzierte Aberrationen beeinflusst werden (Castello et al. 2019; Fig. 1c). Eine Möglichkeit, diese Rückschiebevektoren nur aus den Bilddaten der einzelnen Pixel des Sensors zu ermitteln, wird im nächsten Abschnitt angegeben.

Bestimmung der Verschiebungsvektoren über eine Phasenkorrelation

Eine weitere Möglichkeit der Datenauswertung für den betrachteten Fall beruht auf der Annahme, dass die Wellenlängen eines zu einem Farbstoff gehörenden Bands, welche man hier auswertet in aller Regel durch eine ganz bestimmte räumliche Struktur der Probe gekennzeichnet sind und diese Struktur letztlich für alle spektralen Anteile identisch ist, da ja diese Struktur mit dem entsprechenden Farbstoff markiert wurde. Eine zweite Farbe, zum Beispiel das blau-grüne Spektrum in Figur 11 (Pixelbereich 71), zeichnet sich dann durch andere und unterscheidbare Struktur der Probe aus (z.B. den Zellkern, der z.B. mit DAPI gelabelt wurde). Somit kann man davon ausgehen, dass die Bilder letztlich alle einen weitgehend identischen strukturellen Inhalt haben, auch wenn sie mit leicht unterschiedlichen Farben emittieren. In dem Fall bietet sich als weitere Variante eine Phasenkorrelation an [Castello et al., 2019].

Dabei werden zunächst die Pixel des gescannten Bildes nummeriert und bezeichnet gemäß $n = (n_x, n_y)$. Hiermit wird das Bild, welches aus $N_x \times N_y$ Bildpunkten besteht, als $g_{i,j}(n)$ notiert mit $n_x = 1 \ldots N_x$ und $n_y = 1 \ldots N_y$. Weiterhin definiert man das sogenannte Korrelogramm (hier bezogen auf ein Referenzpixel *(3, 3)*)

$$r_{i,j} = FFT^{-1}\left( \frac{FFT(\boldsymbol{g}_{i,j})FFT(\boldsymbol{g}_{3,3})^*}{\left| FFT(\boldsymbol{g}_{i,j})FFT(\boldsymbol{g}_{3,3})^* \right|} \right)$$

$$(13)$$

*FFT und FFT$^{-1}$* bedeuten hier in grundsätzlich bekannter Weise die (Fast)-Fourier-Transformation beziehungsweise deren Umkehrung. Das Maximum dieses Korrelogramms

$$\left( \boldsymbol{s}_{i,j}^x, \boldsymbol{s}_{i,j}^y \right) = \arg\max_{(\boldsymbol{n_x}, \boldsymbol{n_y})} \left( \boldsymbol{r}_{i,j}(\boldsymbol{n}) \right)$$

$$(14)$$

liefert dann den jeweiligen Verschiebungsvektor, um welchen der Bildinhalt zurückgeschoben werden muss.

Der Nutzungsbereich dieser Methode wird ebenfalls in [Castello et al., 2019] diskutiert. Letzten Endes ist dieses Vorgehen ähnlich zu einer sogenannten Registrierung der Bilder, die die verschiedenen Pixel liefern. Ein Vorteil dieser Auswertung ist, dass die Dispersion im Grunde nicht einmal bekannt sein muss und auch verschiedene funktionale Verläufe der Dispersion mit dem Algorithmus behandelt werden können. Zudem ist die Methode weniger abhängig von Aberrationen der Abbildung auf den Sensor. Allerdings ist der rechnerische Aufwand höher.

Grundsätzlich können für die vorliegende Erfindung auch weitere, aus dem Image Scanning bekannte Verfahren genutzt werden. Wir verweisen dazu erneut auf [Castello et al., 2019]. Dort wird auch eine sogenannte Multiview-Deconvolution für die Datenauswertung diskutiert, die auch bei der vorliegenden Erfindung zum Einsatz kommen kann. Weiterhin kann die auf veröffentlichte Literatur zum Zeiss-Airyscan zurückgegriffen werden.

Somit ist ein weiterer Weg angegeben, wie man die Daten des konfokalen spektralen Sensors mit räumlicher Überabtastung der PSF auswerten kann, um simultan die besser aufgelösten Bilder mit erhöhtem SNR zu ermitteln und gleichzeitig das Spektrum zu bestimmen.

Das Spektrum selbst kann, wie oben beschrieben, immer durch Summation der Pixel in einer Spalte, also senkrecht zur Dispersionsrichtung erhalten werden (Richtung j in Abbildung 3 oben).

Anwendung auf Mehrfarbanregungen

Sehr vorteilhaft lässt sich das erfindungsgemäße Verfahren auch auf die gleichzeitige Detektion von mehreren Farbstoffen anwenden. Hierzu ist es vorteilhaft, dass die Integrationsgrenzen, insbesondere in der Dispersionsrichtung 41 flexibel festgelegt werden können. Mit Integrationsgrenzen sind dabei diejenigen Grenzen gemeint, innerhalb derer für einen bestimmten Farbstoff die einzelnen spektralen Beiträge der Punktverteilungsfunktion summiert werden müssen. Dadurch kann beispielsweise die Ausdehnung der Punktverteilungsfunktion für jeden Farbstoff separat kalibriert werden. Im Zusammenhang mit Figur 9 wird das näher erläutert.

Figur 9a) zeigt eine Summe aus 1000 simulierten Aufnahmen der SPAD-Kamera 50 bei Belichtung mit zwei Farbstoffen zu je 10 MHz Photonenstrom und 1 µs Belichtungsdauer der Einzelbilder. Figur 9b) zeigt das gesamte aus den Bilddaten ermittelte Spektrum. Figur 9c) zeigt bei Einschränkung der Integrationsbandbreite gewonnene Teilspektren. Figur 9d) schließlich zeigt die in den in Figur 9c) dargestellten Teilbereichen ermittelte Punktverteilungsfunktion.

**EP 4 189 358 B1**

Automatisierungsoptionen

Die Kalibrierung des Systems gilt streng immer nur für ein fest voreingestelltes Experiment, da sie insbesondere vom gewählten Objektiv und den untersuchten Farbstoffen abhängt. Nach einer Modifikation des Experiments ist es also sinnvoll, das System die Kalibrierung neu anlernen zu lassen, indem eine Auswertung der gemittelten Bilddaten gemäß Figur 8 und Figur 9 erfolgt und die Kalibrierdaten beispielsweise in den Speicher der Auswerteelektronik 60 geschrieben werden.

Vorteilhaft ist außerdem eine fortwährende Erneuerung der Kalibrierdaten aus den letzten (wenigen) LSM-Bildscans. Dadurch kann das System selbständig auf Änderungen der Experimentierumgebung reagieren.

Ein weiterer vorteilhafter Aspekt ist die Möglichkeit der automatisierten Einstellung der Spektralkanäle durch Definition der Integrationsgrenzen. Ermöglicht wird das durch die hochaufgelöste Abtastung des Spektralraums mit Schritten von 1 nm oder noch feiner. Beispielsweise kann aus dem integrierten Signal aus Figur 9b) ein Algorithmus zum Finden von Maxima und Minima einen Vorschlag für die Festlegung von Integrationsgrenzen oder, gleichbedeutend, Spektralkanälen, ermitteln. Somit kann das System auch die Emission aus unbekannten Proben effizient detektieren und eine günstige Farbstofftrennung voreinstellen. Gegebenenfalls können Spalten in y-Richtung des Matrixsensors 50, auf welche Licht mit der Wellenlänge des Anregungslichts 14 fällt, nicht ausgewertet oder abgeschaltet werden.

Bezugszeichenliste

| | |
|---|---|
| 10 | Anregungsstrahlengang |
| 12 | Lichtquelle |
| (12,3) | Referenzpixel |
| 14 | Anregungslicht |
| 16 | Umlenkspiegel |
| 18 | Hauptfarbteiler |
| 22 | Scaneinrichtung |
| 23 | Tubuslinse |
| 24 | Mikroskopobjektiv |
| 26 | Probenebene |
| 27 | Beleuchtungspot |
| 28 | Emissionslicht |
| 29 | Beugung nullter Ordnung |
| 30 | Detektionsstrahlengang |
| 32 | Detektionseinheit |
| (3,3) | Referenzpixel |
| 34 | Steuer- und Auswerteeinheit, insbesondere PC |
| 40 | Dispersionseinrichtung |
| 41 | Dispersionsrichtung |
| 42 | spektrale Komponente des Emissionslichts 28 |
| 43 | Gitter |
| 44 | spektrale Komponente des Emissionslichts 28 |
| 46 | spektrale Komponente des Emissionslichts 28 |
| 47 | spektrale Komponente des Emissionslichts 28 |
| 48 | Abbildungsoptik |
| 50 | zweidimensionaler Matrixsensor |
| 51 | Pixel des Matrixsensors 50 |
| 53 | Größe eines Pixels |
| 54 | Matrixsensor |
| 56 | Bildebene (= Ebene des Matrixsensors 50) |
| 57 | Schwerpunkt der Funktion $s_{5,4}$ |
| 60 | Auswerteelektronik |
| 71 | Pixelbereich eines Farbstoffs |
| 72 | Pixelbereich eines Farbstoffs |
| 80 | kreissymmetrische Punktverteilungsfunktion |
| 100 | Laser-Scanning-Mikroskop |
| 200 | Detektionsvorrichtung |

| | | |
|---|---|---|
| a | Gitterkonstante des Matrixsensors 50 |
| $d_{i,j}$ | Verschiebevektor für Pixel-Reassignment |
| $d_{i,j}{}^x$ | x-Komponente des Verschiebevektors $d_{i,j}$ |
| $d_{i,j}{}^y$ | y-Komponente des Verschiebevektors $d_{i,j}$ |
| $g_{i,j}(n)$ | Bild an der Position $n$ |
| $g_{i,j}, g_{i,j}(x)$ | vom Pixel $i, j$ gemessener Intensitätswert |
| $g_{i,j}$ | Ortsvektor zu Pixel $i, j$ in Bildebene 56 |
| $h^{em}(x)$ | PSF der Emission |
| $h^{exc}(x)$ | PSF der Anregung |
| $h_{i,j}(x)$ | effektive PSF für Pixel $i, j$ |
| $i$ | Spalte des Matrixsensors 50 |
| $(i, j)$ | Pixel |
| $j$ | Zeile des Matrixsensors 50 |
| m | Zahl der Zeilen des Matrixsensors 50 |
| mi | Minimum in der spektralen Verteilung $sp_i$ |
| mx1 | Maximum in der spektralen Verteilung $sp_i$ |
| mx2 | Maximum in der spektralen Verteilung $sp_i$ |
| n | Zahl der Spalten des Matrixsensors 50 |
| $n$ | Ortsvektor zu einem Bildpunkt |
| $n_x$ | x-Komponente des Ortsvektors $n$ zu einem Bildpunkt |
| $n_y$ | y-Komponente des Ortsvektors $n$ zu einem Bildpunkt |
| $r_{i,j}$ | Korrelogramm für Pixel $i, j$ |
| s1 | Emissionsspektrum eines Farbstoffs |
| s2 | Emissionsspektrum eines Farbstoffs |
| $s_{i,j}$ | Ortsvektor zum Maximum der effektiven PSF $h_{i,j}(x)$ |
| $sp(\lambda)$ | spektrale Verteilung (kontiniuierlich) |
| $sp_i$ | spektralen Verteilung (diskret) |
| x | in die Probenebene zurückprojizierter Ort in der Bildebene 56 |
| x | Koordinatenrichtung von Matrixsensor 50 (=Dispersionsrichtung) |
| y | Koordinatenrichtung von Matrixsensor 50 (senkrecht zu Dispersionsrichtung) |
| $Airy(x,\lambda)$ | Airyfunktion |
| $I^{cal}_i$ | räumliche Intensitätsverteilung |
| $I_{i,j}$ | vom Pixel $i, j$ gemessener Intensitätswert |
| $N_x$ | Anzahl der Bildpunkte in x-Richtung |
| $N_y$ | Anzahl der Bildpunkte in y-Richtung |
| FFT | Fast-Fourier-Transformation |
| FFT$^{-1}$ | umgekehrte oder inverse Fast-Fourier-Transformation |
| Pi-n,j | Überlappdaten betreffend ein räumliches Überlappen von in der Dispersionsrichtung 41 verschobenen spektralen Anteilen einer Punktverteilungsfunktion eines Farbstoffs auf dem Matrixsensor 50 |
| PSF | Punktverteilungsfunktion (Point Spread Function) |
| S | Probe |
| SNR | Signal-zu-Rausch-Verhältnis |
| $\xi(\lambda), \xi_i(\lambda)$ | wellenlängenabhängiger Anteil von Verschiebevektor $d_{i,j}$ |
| $\delta\lambda$ | spektrale Bandbreite eines Farbstoffs |
| $\lambda$ | Wellenlänge |
| $\lambda_i$ | Wellenlänge an der Spalte $i$ des Matrixsensors 50 |
| $\lambda_r$ | Wellenlänge an der Stelle oder Spalte eines Referenzpixels |
| x | Konstante zur Modellierung der Dispersion für Verschiebevektor $d_{i,j}$ |

## Patentansprüche

1. Verfahren zum Detektieren von Emissionslicht (28), insbesondere Fluoreszenzlicht von mindestens einem Fluoreszenzfarbstoff, in einem Laser-Scanning-Mikroskop, bei dem von einer Probe (S) kommendes Emissionslicht (28) mit einer Abbildungsoptik (48) auf einen in einer Bildebene (56) befindlichen zweidimensionalen Matrixsensor (50) mit einer Vielzahl von Pixeln (51) geleitet wird,

   wobei eine Detektionspunktverteilungsfunktion mit dem Matrixsensor (50) räumlich überabgetastet detektiert wird,

wobei das von der Probe (S) kommende Emissionslicht (28) mit einer Dispersionseinrichtung (40), insbesondere in einer Dispersionsrichtung (41), spektral zerlegt wird,

wobei das spektral zerlegte Emissionslicht (42, 44, 46, 47) mit dem Matrixsensor (50) spektral aufgelöst detektiert wird und

wobei bei der Auswertung der von den Pixeln (i, j) eines Pixelbereichs (71, 72) gemessenen Intensitäten ($I_{i,j}$; $g_{i,j}$) die spektrale Auftrennung mindestens für einige dieser Pixel (i, j) zurückgenommen wird,

**dadurch gekennzeichnet,**

**dass** zur Rücknahme der spektralen Auftrennung für die einzelnen Pixel (i, j) eines Pixelbereichs (71, 72) die von den Pixeln (i, j) gemessenen Intensitätswerte ($g_{i,j}$) einem relativ zu dem jeweiligen Pixel (i, j) durch ein Pixel-Reassignment um einen Verschiebungsvektor ($d_{i,j}$) verschobenen Ort in der Bildebene (56) zugewiesen werden, wobei der Verschiebungsvektor ($d_{i,j}$) abhängt vom Ort des jeweiligen Pixels (i, j) und von der zu diesem Ort gehörenden Wellenlänge $(\lambda)$.

2. Verfahren nach Anspruch 1,
   **dadurch gekennzeichnet,**
   **dass** anhand eines mit dem Matrixsensor (50) gemessenen Spektrums mindestens ein Pixelbereich (71, 72) identifiziert wird, der der Emission eines Farbstoffs zugewiesen wird.

3. Verfahren nach Anspruch 1 oder 2,
   **dadurch gekennzeichnet,**
   **dass** für die Bestimmung einer spektralen Intensitätsverteilung ($sp(\lambda)$, $sp_i$) des Emissionslichts auf dem Matrixsensor (50) ein zu einer bestimmten Wellenlänge ($\lambda_i$) gehörender Intensitätswert ($sp(\lambda)$, $sp_i$) bestimmt wird, indem die Messdaten ($I_{i,j}$; $g_{i,j}$) einer Mehrzahl von Pixeln (i, j) einer Spalte (1) des Matrixsensors (50), insbesondere die Messdaten aller Pixel (i, j) einer Spalte (i) des Matrixsensors (50), senkrecht zu der Dispersionsrichtung (41), summiert werden.

4. Verfahren nach einem der Ansprüche 1 bis 3,
   **dadurch gekennzeichnet,**
   **dass** die Pixelbereiche (71, 72) auf dem Matrixdetektor (50) überlappen und dass ein spektrales Entmischen der von den einzelnen Pixeln gemessenen Intensitäten durchgeführt wird.

5. Verfahren nach einem der Ansprüche 1 bis 4,
   **dadurch gekennzeichnet,**
   **dass** für mindestens einen Fluoreszenzfarbstoff eine Detektionspunktverteilungsfunktion bestimmt wird.

6. Verfahren nach einem der Ansprüche 1 bis 5,
   **dadurch gekennzeichnet,**
   **dass** von mehreren gleichzeitig auf einer Probe (S) mit Anregungslicht (14) beleuchteten Punkten abgestrahltes Emissionslicht (28) gleichzeitig auf den Matrixsensor (50) geleitet und ausgewertet wird.

7. Verfahren nach einem der Ansprüche 1 bis 6,
   **dadurch gekennzeichnet,**
   **dass** der Matrixsensor (50) in einem Photonenzählmodus betrieben wird.

8. Verfahren nach einem der Ansprüche 1 bis 7,
   **dadurch gekennzeichnet,**
   **dass** ein von der Wellenlänge unabhängiger Anteil des Verschiebevektors ($d_{i,j}$) für ein bestimmtes Pixel (i, j) erhalten wird durch Skalieren einer Vektorkomponente des Vektors ($g_{i,j}$) von einem Referenzpixel (12,3) zu dem betreffenden Pixel (i, j) mit einem Reassignment-Faktor, insbesondere mit -1/2.

9. Verfahren nach einem der Ansprüche 1 bis 8,
   **dadurch gekennzeichnet,**
   **dass** eine nach Durchführung des Pixel-Reassignments erhaltene Detektionspunktverteilungsfunktion in der Dispersionsrichtung (x, 41) im Wesentlichen dieselbe Form aufweist wie senkrecht zur Dispersionsrichtung (y).

10. Verfahren nach einem der Ansprüche 1 bis 9,
    **dadurch gekennzeichnet,**

**dass** die Verschiebevektoren ($d_{i,j}$), die zu einem einer Probenstruktur zugeordneten Wellenlängenbereich gehören, bestimmt werden durch Auswerten einer Phasenkorrelation einer Mehrzahl von gescannten Bildern.

11. Verfahren nach einem der Ansprüche 1 bis 10,
    **dadurch gekennzeichnet,**
    **dass** mit dem Matrixsensor (50), zum Beispiel mit einigen Pixeln des Matrixsensors (50) und insbesondere mit jedem einzelnen Pixel des Matrixsensors (50), zeitaufgelöste Messungen zur Bestimmung von Fluoreszenzlebensdauern der Farbstoffe durchgeführt werden.

12. Detektionsvorrichtung zum Detektieren von Emissionslicht in einem Laser-Scanning-Mikroskop, insbesondere zum Durchführen des Verfahrens nach einem der Ansprüche 1 bis 11,

    mit einem zweidimensionalen Matrixsensor (50) in einer Bildebene (56) mit einer Vielzahl von Pixeln (51) zum räumlich überabgetasteten Detektieren einer Detektionspunktverteilungsfunktion von von einer Probe (S) kommendem Emissionslicht (28) und mit einer Abbildungsoptik (48) zum Leiten des Emissionslichts (28) auf den zweidimensionalen Matrixsensor (50),
    wobei zum spektralen Auftrennen des Emissionslichts (28) eine Dispersionseinrichtung (40) vorhanden ist,
    wobei der Matrixsensor (50) zum spektral auflösenden Detektieren des spektral aufgetrennten Emissionslichts (42, 44, 46, 47) eingerichtet und positioniert ist und wobei eine mit dem Matrixsensor (50) verbundene Auswerteelektronik (60) vorhanden ist, die dazu eingerichtet ist, bei der Auswertung der von den Pixeln ($i, j$) eines Pixelbereichs (71, 72) gemessenen Intensitäten ($I_{i,j}$; $g_{i,j}$) die spektrale Auftrennung für diese Pixel ($i, j$) zurückzunehmen,
    **dadurch gekennzeichnet,**
    **dass** die Auswerteelektronik (60) dazu eingerichtet ist, zur Rücknahme der spektralen Auftrennung für die einzelnen Pixel ($i, j$) eines Pixelbereichs (71, 72) die von den Pixeln ($i, j$) gemessene Intensitätswerte ($g_{i,j}$) einem relativ zu dem jeweiligen Pixel ($i, j$) durch ein Pixel-Reassignment um einen Verschiebungsvektor ($d_{i,j}$) verschobenen Ort in der Bildebene (56) zuzuweisen, wobei der Verschiebungsvektor ($d_{i,j}$) abhängt vom Ort des jeweiligen Pixels ($i, j$) und von der zu diesem Ort gehörenden Wellenlänge ($\lambda$).

13. Detektionsvorrichtung nach Anspruch 12,
    **dadurch gekennzeichnet,**
    **dass** der Matrixsensor (50) und die Auswerteelektronik (60), insbesondere für die Bestimmung von Fluoreszenzlebensdauern von Farbstoffen, eingerichtet sind zum Durchführen von zeitaufgelösten Messungen, zum Beispiel mit einigen Pixeln des Matrixsensors (50) und bevorzugt mit jedem einzelnen Pixel des Matrixsensors (50).

14. Laser-Scanning-Mikroskop,

    insbesondere zum Durchführen des Verfahrens nach einem der Ansprüche 1 bis 11,
    mit einer Lichtquelle (12), insbesondere einem Laser, zum Aussenden von Anregungslicht (14),
    mit einem Anregungsstrahlengang (10) mit einem Mikroskopobjektiv (24) zum Leiten des Anregungslichts (14) auf oder in eine zu untersuchende Probe (S), mit einer Scaneinrichtung (22) im Anregungsstrahlengang (10) zum Scannen mindestens eines Beleuchtungsspots (27) über die Probe (S),
    mit einem Detektionsstrahlengang (30) zum Leiten von von der Probe (S) abgestrahltem Emissionslicht (28), insbesondere Fluoreszenzlicht, auf eine Detektionseinheit (32),
    mit der Detektionseinheit (32) zum Nachweisen des Emissionslichts (28), mit einem Hauptfarbteiler (18) zum Trennen von Anregungslicht (14) und Emissionslicht (28) und
    mit einer Steuer- und Auswerteeinheit (34), insbesondere einem PC, zum Ansteuern der Lichtquelle (12) und zum Auswerten von von der Detektionseinheit (32) gewonnenen Messdaten,
    **dadurch gekennzeichnet,**
    **dass** die Detektionseinheit (32) eine Detektionsvorrichtung (200) gemäß den Ansprüchen 12 oder 13 aufweist.

15. Mikroskop nach Anspruch 14,
    **dadurch gekennzeichnet,**

    **dass** die Steuer- und Auswerteeinheit (34) eingerichtet ist zum Suchen von Maxima (mx1, mx2) und Minima (mi) in einer ermittelten spektralen Verteilung ($sp(\lambda)$, $sp_i$),
    und zum Vorschlagen von spektralen Grenzen für das Errechnen der Punktverteilungsfunktion eines bestimmten Farbstoffs auf Grundlage von gefundenen Maxima (mx1, mx2) und Minima (mi) oder

zum selbständigen Festlegen von spektralen Grenzen für das Errechnen der Punktverteilungsfunktion eines bestimmten Farbstoffs auf Grundlage von gefundenen Maxima (mx1, mx2) und Minima (mi).

**Claims**

1. Method for detecting emission light (28), in particular fluorescence light from at least one fluorescent dye, in a laser scanning microscope, in which emission light (28) coming from a sample (S) is guided by way of an imaging optical unit (48) to a two-dimensional matrix sensor (50) that is situated in an image plane (56) and has a multiplicity of pixels (51),

   wherein a detection point spread function is detected in spatially oversampled fashion using the matrix sensor (50),
   wherein the emission light (28) coming from the sample (S) is spectrally decomposed, in particular in a dispersion direction (41), using a dispersion device (40),
   wherein the spectrally decomposed emission light (42, 44, 46, 47) is detected in spectrally resolved fashion using the matrix sensor (50), and
   wherein the evaluation of the intensities ($I_{i,j}$; $g_{i,j}$) measured by the pixels ($i,j$) of a pixel region (71, 72) includes a reversal of the spectral separation for at least some of these pixels ($i,j$),
   **characterized in that**
   in order to reverse the spectral separation for the individual pixels ($i,j$) of a pixel region (71, 72), the intensity values ($g_{i,j}$) measured by the pixels ($i,j$) are assigned to a location in the image plane (56) that has been displaced relative to the respective pixel ($i,j$) by pixel reassignment, with the displacement vector ($d_{i,j}$) depending on the location of the respective pixel ($i,j$) and the wavelength ($\lambda$) associated with that location.

2. Method according to claim 2,
   **characterized in that**
   at least one pixel region (71, 72) which is assigned to the emission of a dye is identified on the basis of a spectrum measured using the matrix sensor (50).

3. Method according to claim 1 or 2,
   **characterized in that**
   in order to determine a spectral intensity distribution ($sp(\lambda)$,$sp_i$) of the emission light on the matrix sensor (50), an intensity value ($sp(\lambda)$,$sp_i$) associated with a specific wavelength ($\lambda_i$) is determined by summing the measurement data ($I_{i,j}$; $g_{i,j}$) of a plurality of pixels ($i,j$) in a column ($i$) of the matrix sensor (50), in particular the measurement data of all pixels ($i,j$) in a column (i) of the matrix sensor (50), perpendicular to the dispersion direction (41).

4. Method according to any one of claims 1 to 3,
   **characterized in that**

   the pixel regions (71, 72) overlap on the matrix detector (50), and
   **in that** a spectral unmixing of the intensities measured by the individual pixels is carried out.

5. Method according to any one of claims 1 to 4,
   **characterized in that**
   a detection point spread function is determined for at least one fluorescent dye.

6. Method according to any one of claims 1 to 5,
   **characterized in that**
   emission light (28) emitted by a plurality of points on a sample (S) that are illuminated by excitation light (14) at the same time is simultaneously guided to the matrix sensor (50) and evaluated.

7. Method according to any one of claims 1 to 6,
   **characterized in that**
   the matrix sensor (50) is operated in a photon counting mode.

8. Method according to any one of claims 1 to 7,
   **characterized in that**

a wavelength-independent component of the displacement vector ($d_{i,j}$) is obtained for a specific pixel ($i,j$) by scaling a vector component of the vector ($g_{i,j}$) from a reference pixel (12,3) to the relevant pixel (i,j) by a reassignment factor, in particular by -1/2.

9. Method according to any one of claims 1 to 8,
**characterized in that**
a detection point spread function obtained after performing the pixel reassignment has substantially the same shape in the dispersion direction (x, 41) as perpendicular to the dispersion direction (y).

10. Method according to any one of claims 1 to 9,
**characterized in that**
the displacement vectors ($d_{i,j}$) associated with a wavelength range assigned to a sample structure are determined by evaluating a phase correlation of a plurality of scanned images.

11. Method according to any one of claims 1 to 10,
**characterized in that**
time-resolved measurements for determining fluorescence lifetimes of the dyes are carried out using the matrix sensor (50), for example using some pixels of the matrix sensor (50) and in particular using each individual pixel of the matrix sensor (50).

12. Detection apparatus for detecting emission light in a laser scanning microscope, in particular for carrying out the method according to any one of claims 1 to 11,

comprising a two-dimensional matrix sensor (50) in an image plane (56) with a multiplicity of pixels (51) for spatially oversampled detection of a detection point spread function of emission light (28) coming from a sample (S), and comprising an imaging optical unit (48) for guiding the emission light (28) to the two-dimensional matrix sensor (50),
wherein a dispersion device (40) is provided for the spectral separation of the emission light (28),
wherein the matrix sensor (50) is configured and positioned for the spectrally resolved detection of the spectrally separated emission light (42, 44, 46, 47), and
wherein evaluation electronics (60) are provided, which are connected to the matrix sensor (50) and are configured, within the scope of evaluating the intensities ($I_{i,j}$; $g_{i,j}$) measured by the pixels ($i,j$) of a pixel region (71, 72), to reverse the spectral separation for these pixels ($i,j$),
**characterized in that**
in order to reverse the spectral separation for the individual pixels ($i,j$) of a pixel region (71, 72), the evaluation electronics (60) are configured to assign the intensity values ($g_{i,j}$) measured by the pixels ($i,j$) to a location in the image plane (56) that has been displaced by a displacement vector ($d_{i,j}$) relative to the respective pixel ($i,j$) by pixel reassignment, with the displacement vector ($d_{i,j}$) depending on the location of the respective pixel (i,j) and the wavelength ($\lambda$) associated with that location.

13. Detection apparatus according to claim 12,
**characterized in that**
in particular in order to determine fluorescence lifetimes of dyes, the matrix sensor (50) and the evaluation electronics (60) are configured to carry out time-resolved measurements, for example using some pixels of the matrix sensor (50) and preferably using each individual pixel of the matrix sensor (50).

14. Laser scanning microscope,

in particular for carrying out the method according to any one of claims 1 to 11, comprising a light source (12), in particular a laser, for emitting excitation light (14),
comprising an excitation beam path (10) with a microscope objective (24) for guiding the excitation light (14) onto or into a sample (S) to be examined, comprising a scanning device (22) in the excitation beam path (10) for scanning at least one illumination spot (27) over the sample (S), comprising a detection beam path (30) for guiding emission light (28) emitted by the sample (S), in particular fluorescent light, to a detection unit (32), comprising the detection unit (32) for detecting the emission light (28), comprising a main color splitter (18) for separating excitation light (14) and emission light (28), and
comprising a control and evaluation unit (34), in particular a PC, for controlling the light source (12) and for evaluating measurement data obtained by the detection unit (32),

**characterized in that**

the detection unit (32) comprises a detection apparatus (200) according to claim 12 or 13.

15. Microscope according to claim 14,
    **characterized in that**

    the control and evaluation unit (34) is configured
    to search for maxima (mx1, mx2) and minima (mi) in a determined spectral distribution ($sp(\lambda),sp_i$),
    and to propose spectral limits for calculating the point spread function of a specific dye on the basis of maxima (mx1, mx2) and minima (mi) that have been found, or
    to independently define spectral limits for calculating the point spread function of a specific dye on the basis of maxima (mx1, mx2) and minima (mi) that have been found.

**Revendications**

1. Procédé de détection d'une lumière d'émission (28), en particulier d'une lumière fluorescente d'au moins un colorant fluorescent, dans un microscope à balayage laser, où une lumière d'émission (28) provenant d'un échantillon (S) est guidée avec une optique d'imagerie (48) jusque sur un capteur matriciel (50) bidimensionnel, se trouvant dans un plan d'image (56), et comprenant une pluralité de pixels (51),

   dans lequel une fonction de distribution de points de détection est détectée de façon spatialement suréchantillonnée avec le capteur matriciel (50), dans lequel la lumière d'émission (28) provenant de l'échantillon (S) est décomposée de façon spectrale avec un équipement de dispersion (40), en particulier dans une direction de dispersion (41),
   dans lequel la lumière d'émission (42, 44, 46, 47) décomposée de façon spectrale est détectée avec le capteur matriciel (50) en étant résolue de façon spectrale et
   dans lequel, lors de l'analyse des intensités ($l_{i,j}$ ; $g_{i,j}$) mesurées par les pixels ($i, j$) d'une région de pixels (71; 72), la séparation spectrale est reprise au moins pour certains de ces pixels ($i, j$),
   **caractérisé en ce que**
   pour la reprise de la séparation spectrale pour les pixels ($i, j$) individuels d'une région de pixels (71; 72), les valeurs d'intensité ($g_{i,j}$) mesurées par les pixels ($i, j$) sont allouées à un emplacement, dans le plan d'image (56), déplacé par rapport au pixel ($i, j$) respectif par une réaffectation de pixel, dans lequel le vecteur de déplacement ($d_{i,j}$) dépend de l'emplacement du pixel ($i, j$) respectif et de la longueur d'onde ($\lambda$) appartenant à cet emplacement.

2. Procédé selon la revendication 1,
   **caractérisé en ce que**
   à l'aide d'un spectre mesuré avec le capteur matriciel (50), au moins une région de pixels (71; 72) est identifiée qui est allouée à l'émission d'un colorant.

3. Procédé selon la revendication 1 ou 2,
   **caractérisé en ce que**
   pour la détermination d'une distribution d'intensité ($sp(\lambda),sp_i$) spectrale de la lumière d'émission sur le capteur matriciel (50) est déterminée une valeur d'intensité ($sp(\lambda),sp_i$) appartenant à une longueur d'onde ($\lambda_i$) déterminée en additionnant les données de mesure ($l_{i,j}$ ; $g_{i,j}$) d'une pluralité de pixels ($i, j$) d'une colonne ($i$) du capteur matriciel (50), en particulier les données de mesure de tous les pixels ($i, j$) d'une colonne ($i$) du capteur matriciel (50), transversalement à la direction de dispersion (41).

4. Procédé selon l'une des revendications 1 à 3,
   **caractérisé en ce que**
   les régions de pixels (71; 72) se chevauchent sur le capteur matriciel (50) et **en ce qu'**est réalisée une dissociation spectrale des intensités mesurées par les pixels individuels.

5. Procédé selon l'une des revendications 1 à 4,
   **caractérisé en ce que**
   une fonction de distribution de points de détection est déterminée pour au moins un colorant fluorescent.

**6.** Procédé selon l'une des revendications 1 à 5,
**caractérisé en ce que**
une lumière d'émission (28) irradiée par plusieurs points éclairés simultanément avec une lumière d'excitation (14) sur un échantillon (S) est guidée et analysée simultanément jusque sur le capteur matriciel (50).

**7.** Procédé selon l'une des revendications 1 à 6,
**caractérisé en ce que**
le capteur matriciel (50) est exploité dans un mode de comptage de photons.

**8.** Procédé selon l'une des revendications 1 à 7,
**caractérisé en ce que**
une partie, indépendante de la longueur d'onde, du vecteur de déplacement ($d_{i,j}$) est obtenue pour un pixel ($i, j$) déterminé par produit scalaire d'une composante de vecteur du vecteur ($g_{i,j}$) d'un pixel de référence (12,3) pour le pixel ($i, j$) concerné avec un facteur de réaffectation, en particulier avec -1/2.

**9.** Procédé selon l'une des revendications 1 à 8,
**caractérisé en ce que**
une fonction de distribution de points de détection obtenue après exécution de la réaffectation de pixel présente, dans la direction de dispersion (x, 41), essentiellement la même forme que transversalement à la direction de dispersion (y).

**10.** Procédé selon l'une des revendications 1 à 9,
**caractérisé en ce que**
les vecteurs de déplacement ($d_{i,j}$) qui appartiennent à une région de longueurs d'onde attribuée à une structure d'échantillon, sont déterminés par analyse d'une corrélation de phase d'une pluralité d'images balayées.

**11.** Procédé selon l'une des revendications 1 à 10,
**caractérisé en ce que**
avec le capteur matriciel (50), par exemple avec quelques pixels du capteur matriciel (50) et en particulier avec chaque pixel individuel du capteur matriciel (50), des mesures à résolution temporelle sont exécutées pour la détermination de durées de vie de fluorescence des colorants.

**12.** Dispositif de détection pour la détection d'une lumière d'émission dans un microscope à balayage laser, en particulier pour l'exécution du procédé selon l'une des revendications 1 à 11,

comprenant un capteur matriciel (50) bidimensionnel dans un plan d'image (56) avec une pluralité de pixels (51) pour une détection de façon spatialement suréchantillonnée d'une fonction de distribution de points de détection d'une lumière d'émission (28) provenant d'un échantillon (S) et comprenant une optique d'imagerie (48) pour le guidage de la lumière d'émission (28) jusque sur le capteur matriciel (50) bidimensionnel,
dans lequel pour la séparation spectrale de la lumière d'émission (28) est présent un équipement de dispersion (40),
dans lequel le capteur matriciel (50) est aménagé et positionné pour la détection à résolution spectrale de la lumière d'émission (42, 44, 46, 47) décomposée de façon spectrale et
dans lequel est présente une électronique d'analyse (60) reliée au capteur matriciel (50) qui est aménagée pour, lors de l'analyse des intensités ($I_{i,j}$ ; $g_{i,j}$) mesurées par les pixels ($i, j$) d'une région de pixels (71; 72), la reprise de la séparation spectrale pour ces pixels ($i, j$),
**caractérisé en ce que**
l'électronique d'analyse (60) est aménagée pour, pour la reprise de la séparation spectrale pour les pixels ($i, j$) individuels d'une région de pixels (71; 72), allouer les valeurs d'intensité ($g_{i,j}$) mesurées par les pixels ($i, j$) à un emplacement, dans le plan d'image (56), déplacé par rapport au pixel ($i, j$) respectif selon un vecteur de déplacement ($d_{i,j}$) par une réaffectation de pixel, dans lequel le vecteur de déplacement ($d_{i,j}$) dépend de l'emplacement du pixel ($i, j$) respectif et de la longueur d'onde ($\lambda$) appartenant à cet emplacement.

**13.** Dispositif de détection selon la revendication 12,
**caractérisé en ce que**
le capteur matriciel (50) et l'électronique d'analyse (60), en particulier pour la détermination de durées de vie de fluorescence de colorants, sont aménagés pour l'exécution des mesures à résolution temporelle, par exemple avec quelques pixels du capteur matriciel (50) et de préférence avec chaque pixel individuel du capteur matriciel (50).

**14.** Microscope à balayage laser,

en particulier pour l'exécution du procédé selon l'une des revendications 1 à 11,
comprenant une source de lumière (12), en particulier un laser, pour l'envoi d'une lumière d'excitation (14),
comprenant un trajet de faisceau d'excitation (10) avec un objectif de microscope (24) pour le guidage de la lumière d'excitation (14) jusque sur ou dans un échantillon (S) soumis à examen,
comprenant un équipement de balayage (22) dans le trajet de faisceau d'excitation (10) pour le balayage d'au moins un point d'éclairage (27) pardessus l'échantillon (S),
comprenant un trajet de faisceau de détection (30) pour le guidage de la lumière d'émission (28) irradiée par l'échantillon (S), en particulier d'une lumière fluorescente, jusque sur une unité de détection (32), comprenant l'unité de détection (32) pour le repérage de la lumière d'émission (28),
comprenant un séparateur de couleurs principales (18) pour la séparation de la lumière d'excitation (14) et de la lumière d'émission (28) et comprenant une unité de commande et d'analyse (34), en particulier un PC, pour le pilotage de la source de lumière (12) et pour l'analyse de données de mesure obtenues par l'unité de détection (32),
**caractérisé en ce que**
l'unité de détection (32) présente un dispositif de détection (200) selon les revendications 12 ou 13.

**15.** Microscope selon la revendication 14,
**caractérisé en ce que**

l'unité de commande et d'analyse (34) est aménagée pour la recherche de maxima (mx1, mx2) et de minima (mi) dans une distribution spectrale ($sp(\lambda),sp_i$) établie,
et pour la proposition de limites spectrales pour le calcul de la fonction de distribution de points d'un colorant déterminé sur la base de maxima (mx1, mx2) et de minima (mi) trouvés ou
pour la fixation indépendante de limites spectrales pour le calcul de la fonction de distribution de points d'un colorant déterminé sur la base de maxima (mx1, mx2) et de minima (mi) trouvés.

Fig. 1

EP 4 189 358 B1

Fig. 2

Fig. 3

Fig. 4

Fig. 5

Fig. 6

Fig. 7

a)

b)

c)

Fig. 8

rel. Intensität

rel. Intensität

Pixelnummer (y)

Pixelnummer (x)

Fig. 9

EP 4 189 358 B1

Fig. 10

Fig. 11

Fig. 12

EP 4 189 358 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2020003551 A1
- DE 102014111167 A1
- DE 102017113683 A1
- US 2019258041 A

**In der Beschreibung aufgeführte Nicht-Patentliteratur**

- **M. CASTELLO et al.** Image Scanning Microscopy with Single-Photon Detector Array. *bioRxiv,* 2019
- **STRASSER FRANZISKA et al.** Spectral image scanning microscopy. *Biomedical optics express,* 22. April 2019, vol. 10 (5), 2513-2527
- *Nat Methods,* 2019, vol. 16, 175-178, https://doi.org/10.1038/s41592-018-0291-9